# EUROPEAN PATENT SPECIFICATION

(11) **EP 2 655 480 B1**
(45) Date of publication and mention of the grant of the patent: **10.12.2014**
(21) Application number: 11811171.5
(22) Date of filing: 21.12.2011
(51) Int. Cl.: C08G 77/26, C08G 77/54, C09D 183/16

(54) **POLYSILOXANE-N, N-DIHYDROCARBYLENE SUGAR-MODIFIED MULTIBLOCK COPOLYMER AND METHOD FOR PRODUCING THE SAME**
ZUCKERMODIFIZIERTES POLYSILOXAN-N-, N-DIHYDROCARBYLEN-MULTIBLOCKCOPOLYMER UND VERFAHREN ZU SEINER HERSTELLUNG
COPOLYMÈRE MULTIBLOC POLYSILOXANE-N, N-DIHYDROCARBYLÈNE À SUCRE MODIFIÉ ET PROCÉDÉ DE PRODUCTION CORRESPONDANT

(30) Priority: 24.12.2010 JP 2010288650
(43) Date of publication of application: 30.10.2013
(73) Proprietor: Dow Corning Toray Co., Ltd., Tokyo, 100-0004 (JP)
(72) Inventor: OKAWA, Tadashi, Ichihara-shi Chiba 299-0108 (JP); NISHIJIMA, Kazuhiro, Ichihara-shi Chiba 299-0108 (JP)
(74) Representative: Thomson, James B.
(86) International application number: PCT/JP2011/080546
(87) International publication number: WO 2012/086847

(56) References cited:
- DE-T5-112008 000 839
- JP-A- 62 068 820
- JP-A- 63 139 106
- US-A1- 2008 199 417

## Description

### TECHNICAL FIELD

The present invention relates to a polysiloxane-N,N-dihydrocarbylene sugar-modified multiblock copolymer and a method for producing the same, as well as use of the aforementioned copolymer.

Priority is claimed on Japanese Patent Application No. 2010-288650, filed on December 24, 2010, the content of which is incorporated herein by reference.

### BACKGROUND ART

Heretofore, silicone oils represented by polydimethylsiloxanes exhibit water repellency, mold releasing properties, and antifoam properties, and for this reason, they have been utilized in mold release agents, antifoamers, lustering agents, textile treating agents, cosmetics and the like. However, conventional silicone oils exhibit no compatibility with water, and are difficult to be emulsified in water. For this reason, the usage methods thereof are restricted. Attempts at introducing various types of hydrophilic groups into the silicone oils in order to enhance miscibility with water have been carried out. Among the aforementioned modified silicones in which hydrophilic groups are introduced, a polyoxyalkylene-modified silicone in which a polyoxyalkylene structure is introduced is the most common one. The aforementioned polyoxyalkylene-modified silicone has a nonionic polymer surfactant structure in which a hydrophobic polydimethylsiloxane and a hydrophilic polyoxyalkylene are bonded. Since the hydrophilic properties of the polyoxyalkylene moiety are relatively low, in order to make a polyoxyalkylene-modified silicone water-soluble or obtain a balance between hydrophilic properties and hydrophobic properties, it is necessary to increase a ratio of the polyoxyalkylene moiety with respect to the whole of silicone. However, in this case, the properties of the silicone may be reversed with the polyoxyalkylene. In addition, the polyoxyalkylene-modified silicones have a cloud point derived from the polyoxyalkylene moiety, and for this reason, there is a problem such as restriction of a usage temperature range.

In order to overcome the aforementioned problems, various types of sugar-modified silicones having properties of silicone oils and containing nonionic hydrophilic groups with a good balance have been proposed. For example, Japanese Patent No. 3172787 discloses a method for producing a sugar-modified silicone by means of an addition reaction between an SiH-functional polysiloxane and an allyl glucoside obtained by reacting glucose and an allyl alcohol or an allyloxyethanol in the presence of an acid catalyst. The aforementioned method has problems in that it is necessary to synthesize and isolate the allyl glucoside beforehand, and a dehydration condensation between the SiH group and the carbinol group cannot be completely prevented during the addition reaction.

In addition, JP-A-2008-274241 discloses a method in which a xylitol monoallyl ether, of which hydroxyl groups are protected by ketalizing xylitol to protect the hydroxyl groups and etherizing the remaining hydroxyl groups by means of a Williamson reaction, is subjected to an addition reaction with an SiH-functional polysiloxane, and subsequently, the protective groups are removed. The aforementioned method is carried out via extremely complex steps, and for this reason, a low productivity is exhibited, and the method is not suitable for mass production. In addition, JP-A-2008-274241 also discloses a method in which a xylitol monoallyl ether obtained by deprotecting the hydroxyl groups of the aforementioned hydroxyl-protected xylitol monoallyl ether is subjected to an addition reaction with an SiH-functional polysiloxane. This method has a problem in that a dehydration condensation between the SiH group and the carbinol group cannot be completely prevented during the addition reaction, as described above.

As the easiest method providing a high yield and a high selectivity for introducing a sugar residue into a silicone, JP-B-H05-25252, JP-A-S63-139106, and Japanese Translation No. 2008-542284 of the PCT international application have disclosed a reaction between an amino-modified silicone and an aldonolactone or a uronolactone. However, the sugar-modified silicones obtained by the reaction between the amino-modified silicones and the aldonolactones or uronolactones have a problem in that the binding part between the carbonyl group and the amino group is easily hydrolyzed. Therefore, amelioration thereof has been desired.

### DISCLOSURE OF INVENTION

### Technical Problems

An objective of the present invention is to provide a novel and stable organopolysiloxane, which has both hydrophobic properties and hydrophilic properties and exhibits reduced hydrolysis properties.

In addition, another objective of the present invention is to provide a preparation method in which a novel and stable organopolysiloxane, which has both hydrophobic properties and hydrophilic properties and exhibits reduced hydrolysis properties, can be easily synthesized without using complicated and/or troublesome operations.

### Technical Solution

The objective of the present invention can be achieved by a polysiloxane-N,N-dihydrocarbylene sugar-modified multiblock copolymer having at least one unit represented by the following general formula: 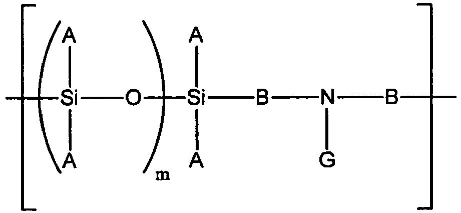 wherein
each A independently represents a monvalent hydrocarbon group having no aliphatic unsaturated bond;
each B independently represents a divalent hydrocarbon group;
G represents a sugar acid residue; and
m represents a number ranging from 1 to 1,000, inclusive.

The aforementioned A is preferably a methyl group. The aforementioned B is preferably a propylene group. In addition, the number of the aforementioned units may range from 2 to 1,000.

The aforementioned G is preferably an aldonoyl group or a uronoyl group.

The aforementioned aldonoyl group can be represented by -CO-(CHOH)₁-CH₂OH wherein l represents an integer ranging from 1 to 10, and is preferably a ribonic acid residue, an arabinonic acid residue, a xylonic acid residue, a lyxonic acid residue, an allonic acid residue, an altronic acid residue, a gluconic acid residue, a mannoic acid residue, a gulonic acid residue, an idonic acid residue, a galactonic acid residue, or a talonic acid residue.

The aforementioned uronoyl group is preferably a glucuronic acid residue, an iduronic acid residue, a galacturonic acid residue, or a mannuronic acid residue.

The copolymer of the present invention can be preferably blended in an aqueous or emulsion composition.

The copolymer of the present invention can be, in particular, preferably blended in a surface treating agent, paint, or a cosmetic.

The copolymer of the present invention can be used as a surfactant.

Another objective of the present invention can be achieved by a method for producing a polysiloxane-N,N-dihydrocarbylene sugar-modified multiblock copolymer comprising reacting a polysiloxane-hydrocarbylene aminohydrocarbylene multiblock copolymer having at least one unit represented by the following general formula: 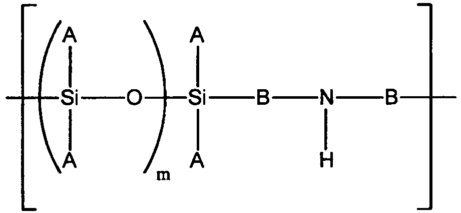 wherein
each A independently represents a monvalent hydrocarbon group having no aliphatic unsaturated bond;
each B independently represents a divalent hydrocarbon group;
and
m represents a number ranging from 1 to 1,000, inclusive,
and a sugar acid or an intramolecular dehydration cyclic product thereof.

The aforementioned sugar acid or intramolecular dehydration cyclic product thereof preferably reacts with the secondary amino group of the aforementioned polysiloxane-hydrocarbylene aminohydrocarbylene multiblock copolymer.

The aforementioned A is preferably a methyl group.

The aforementioned sugar acid is preferably aldonic acid or uronic acid.

The aforementioned aldonic acid is preferably ribonic acid, arabinonic acid, xylonic acid, lyxonic acid, allonic acid, altronic acid, gluconic acid, mannoic acid, gulonic acid, idonic acid, galactonic acid, or talonic acid.

The aforementioned uronic acid is preferably glucuronic acid, iduronic acid, galacturonic acid, or mannuronic acid.

The aforementioned intramolecular dehydration cyclic product of the aforementioned sugar acid is preferably an aldonolactone or a uronolactone.

The aforementioned polysiloxane-N,N-dihydrocarbylene sugar-modified multiblock copolymer preferably has at least one unit represented by the following general formula: 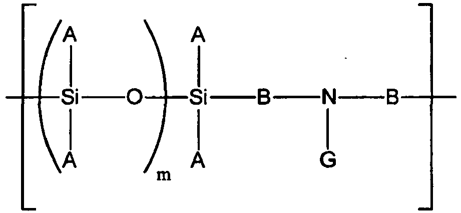 wherein
A, B and m are the same as those described above; and
G represents a sugar acid residue.

The number of the aforementioned units preferably ranges from 2 to 1,000.

### Advantageous Effects of Invention

The polysiloxane-N,N-dihydrocarbylene sugar-modified multiblock copolymer of the present invention is a novel copolymer in which both terminal silicon atoms of a linear polysiloxane are bonded via divalent hydrocarbylene amino groups which are replaced by sugar acid residues in which a hydroxyl group is removed from the sugar acid such as aldonic acid, uronic acid or the like. The aforementioned copolymer of the present invention has a reduced hydrolysis property and is stable. In addition, the aforementioned copolymer of the present invention has both hydrophilic properties due to the sugar (acid) residue and hydrophobic properties due to the organopolysiloxane residue, and is suitable not only as a surfactant, but also as a component of a surface-treating agent of fibers, woven textiles, non-woven textiles, leather, powders and the like, as well as a component of paint or a cosmetic.

In addition, the polysiloxane-N,N-dihydrocarbylene sugar-modified multiblock copolymer of the present invention has a lower hydrolysis property and is more stable, as compared with conventional aldonic amide- or uronic amide-modified silicones. Therefore, the copolymer of the present invention can easily provide a stable emulsion with a reduced particle size.

In accordance with the preparation method of the present invention, the aforementioned polysiloxane-N,N-dihydrocarbylene sugar-modified multiblock copolymer having the aforementioned superior properties can be easily produced with a high productivity.

### BRIEF DESCRIPTION OF DRAWINGS

Fig. 1 is a ²⁹Si-NMR chart of a polysiloxane-hydrocarbylene aminohydrocarbylene multiblock copolymer produced in Preparation Example 1.
Fig. 2 is a ¹³C-NMR chart of a polysiloxane-hydrocarbylene aminohydrocarbylene multiblock copolymer produced in Preparation Example 1.
Fig. 3 is an IR chart of a polysiloxane-hydrocarbylene aminohydrocarbylene multiblock copolymer produced in Preparation Example 1.
Fig. 4 is a ²⁹Si-NMR chart of a polysiloxane-N,N-dipropylenegluconic amide multiblock copolymer produced in Example 1.
Fig. 5 is a ¹³C-NMR chart of a polysiloxane-N,N-dipropylenegluconic amide multiblock copolymer produced in Example 1.
Fig. 6 is an IR chart of a polysiloxane-N,N-dipropylenegluconic amide multiblock copolymer produced in Example 1.

### Best Modes for Carrying Out the Invention

The polysiloxane-N,N-dihydrocarbylene sugar-modified multiblock copolymer of the present invention is a copolymer having an amide group at the main chain of the molecule.

The polysiloxane-N,N-dihydrocarbylene sugar-modified multiblock copolymer of the present invention has at least one unit represented by the following general formula: 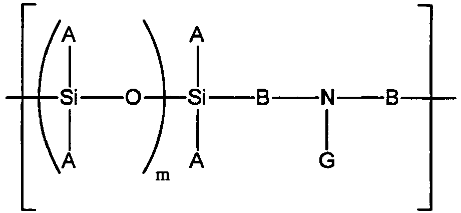 wherein
each A independently represents a monvalent hydrocarbon group having no aliphatic unsaturated bond;
each B independently represents a divalent hydrocarbon group;
G represents a sugar acid residue; and
m represents a number ranging from 1 to 1,000, inclusive.

Examples of monovalent hydrocarbon groups having no aliphatic unsaturated bonds include, for example, substituted or unsubstituted, and linear, cyclic or branched monovalent hydrocarbon groups. As examples thereof, mention may be made of saturated aliphatic hydrocarbon groups such as a methyl group, an ethyl group, a propyl group, a butyl group, a pentyl group, a hexyl group, a heptyl group, an octyl group, a decyl group, a dodecyl group and the like; saturated alicyclic hydrocarbon groups such as a cyclopentyl group, a cyclohexyl group and the like; aromatic hydrocarbon groups such as a phenyl group, a tolyl group, a xylyl group, a naphthyl group and the like; substituted groups thereof in which the hydrogen atoms binding to the carbon atoms of the aforementioned groups are at least partially substituted with a halogen atom such as a fluorine atom or the like, or an organic group containing an epoxy group, a glycidyl group, an acyl group, a carboxyl group, an amino group, a methacryl group, a mercapto group or the like.

The number of carbon atoms of the monovalent hydrocarbon group having no aliphatic unsaturated bonds is not particularly restricted, and preferably ranges from 1 to 30, more preferably ranges from 1 to 20, and further preferably ranges from 1 to 10. As the aforementioned A, a methyl group, an ethyl group, or a phenyl group is preferable, and a methyl group is, in particular, preferable.

Examples of the divalent hydrocarbon groups include, for example, substituted or unsubstituted, and linear or branched divalent hydrocarbon groups. As examples thereof, mention may be made of, for example, linear or branched alkylene groups such as a methylene group, a dimethylene group, a trimethylene group, a tetramethylene group, a pentamethylene group, a hexamethylene group, a heptamethylene group, an octamethylene group and the like; alkenylene groups such as a vinylene, an allylene group, a butenylene group, a hexenylene group, an octenylene group and the like; arylene groups such as a phenylene group, a diphenylene group and the like; alkylenearylene groups such as a dimethylenephenylene group and the like; and substituted groups thereof in which hydrogen atoms binding to carbon atoms of the aforementioned groups are at least partially substituted by a halogen atom such as a fluorine atom or the like, or an organic group containing an epoxy group, a glycidyl group, an acyl group, a carboxyl group, an amino group, a methacryl group, a mercapto group, or the like.

The number of carbon atoms of the divalent hydrocarbon group is not particularly restricted, and preferably ranges from 1 to 30, more preferably ranges from 1 to 20, and further preferably ranges from 1 to 10. As the aforementioned B, a linear or branched alkylene group is preferable, and a propylene group is, in particular, preferable.

The aforementioned sugar acid residue is a residue of a sugar acid in which a part of an oxygen functional group of the sugar is oxidized to a carboxyl group. As the sugar, a monosaccharide is preferable. As examples of the aforementioned oxygen functional groups, mention may be made of an aldehyde group such as a formyl group or the like, a hydroxyl group and the like.

The aforementioned sugar residue is preferably an aldonoyl group or a uronoyl group. The aforementioned aldonoyl group is an acyl group in which an OH group is removed from the carboxyl group of an aldonic acid, and the aforementioned uronoyl group is an acyl group in which an OH group is removed from the carboxyl group of uronic acid.

As examples of the aforementioned aldonoyl group, mention may be made of an aldonoyl group of a residue in which a hydroxyl group is removed from an aldonic acid derived from a reducing monosaccharide such as D-glucose, D-galactose, D-allose, D-altrose, D-mannnose, D-gulose, D-idose, D-talose or the like; an aldonoyl group of a residue in which a hydroxyl group is removed from an aldonic acid derived from a reducing disaccharide such as maltose, cellobiose, lactose, xylobiose, isomaltose, nigerose, kojibiose, or the like; an aldonoyl group of a residue in which a hydroxyl group is removed from an aldonic acid derived from a reducing trisaccharide such as maltotriose, panose, isomaltotriose or the like; an aldonoyl group of a residue in which a hydroxyl group is removed from an aldonic acid derived from a reducing oligosaccahride having tetra- or more saccharide. As examples of the aforementioned uronoyl group, mention may be made of a uronoyl group of a residue in which a hydroxyl group is removed from a uronic acid, such as D-glucuronic acid, L-iduronic acid, or mannuronic acid. They may be a single group or a mixed group in which two or more types thereof are mixed.

The aforementioned aldonoyl group can be represented by -CO-(CHOH)₁-CH₂OH wherein 1 represents an integer ranging from 1 to 10 and preferably ranging from 1 to 5. The aforementioned aldonoyl group is more preferably a ribonic acid residue, an arabinonic acid residue, a xylonic acid residue, a lyxonic acid residue, an allonic acid residue, an altronic acid residue, a gluconic acid residue, a mannoic acid residue, a gulonic acid residue, an idonic acid residue, a galactonic acid residue, or a talonic acid residue. As the aforementioned aldonoyl group, a gluconic acid residue is particularly preferable.

The aforementioned uronoyl group is preferably a glucuronic acid residue, an iduronic acid residue, a galacturonic acid residue, or a mannuronic acid residue. As the aforementioned uronoyl group, a glucuronic acid residue is more preferable.

m preferably ranges from 1 to 500, more preferably ranges from 1 to 300, and further preferably ranges from 1 to 200. If m exceeds 1,000, a content of the sugar acid residue in a molecule is reduced, and the effects of the sugar acid residue may not be sufficiently exhibited in some cases.

The polysiloxane-N,N-dihydrocarbylene sugar-modified multiblock copolymer of the present invention can have 2 to 1,000 units represented by the aforementioned chemical formula. The number of the aforementioned units preferably ranges from 2 to 500, more preferably ranges from 2 to 300, and further preferably ranges from 2 to 100.

The molecular weight of polysiloxane-N,N-dihydrocarbylene sugar-modified multiblock copolymer of the present invention is not particularly restricted, and it may have the number average molecular weight, for example, ranging from 1,000 to 1,000,000. The aforementioned number average molecular weight preferably ranges from 1,000 to 500,000, more preferably ranges from 1,000 to 100,000, and further preferably ranges from 1,000 to 50,000.

The degree of dispersion ((weight average molecular weight)/(number average molecular weight)) of the polysiloxane-N,N-dihydrocarbylene sugar-modified multiblock copolymer of the present invention is not particularly restricted, and the polysiloxane-N,N-dihydrocarbylene sugar-modified multiblock copolymer may have the degree of dispersion, for example, ranging from 1 to 5. The aforementioned degree of dispersion preferably ranges from 1 to 4, more preferably ranges from 1 to 3.5, and further preferably ranges from 1 to 3.

In the polysiloxane-N,N-dihydrocarbylene sugar-modified multiblock copolymer of the present invention, the amide group is present at the main chain of the molecule. For this reason, the polysiloxane-N,N-dihydrocarbylene sugar-modified multiblock copolymer of the present invention is more difficult to be hydrolyzed and is more stable, as compared with cases in which the amide group is present at the side chain of the molecule or at the terminal of the molecular chain.

In addition, the polysiloxane-N,N-dihydrocarbylene sugar-modified multiblock copolymer has a hydrophilic sugar (acid) residue and a hydrophobic organopolysiloxane moiety. For this reason, the copolymer can function as a surfactant.

A method for producing a polysiloxane-N,N-dihydrocarbylene sugar-modified multiblock copolymer of the present invention is characterized in that a polysiloxane-hydrocarbylene aminohydrocarbylene multiblock copolymer having a secondary amino group is reacted with a sugar acid or intramolecular dehydration cyclic product thereof.

The aforementioned sugar acid or intramolecular dehydration cyclic product thereof preferably reacts with the secondary amino group in the aforementioned polysiloxane-hydrocarbylene aminohydrocarbylene multiblock copolymer.

In the method for producing a polysiloxane-N,N-dihydrocarbylene sugar-modified multiblock copolymer of the present invention, a polysiloxane-hydrocarbylene aminohydrocarbylene multiblock copolymer having at least one unit represented by the following general formula: 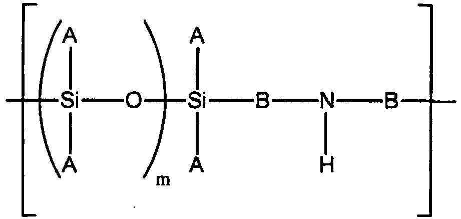 wherein
each A independently represents a monvalent hydrocarbon group having no aliphatic unsaturated bond;
each B independently represents a divalent hydrocarbon group;
and
m represents a number ranging from 1 to 1,000, inclusive,
is reacted with a sugar acid or an intramolecular dehydration cyclic product thereof.

The aforementioned polysiloxane-hydrocarbylene aminohydrocarbylene multiblock copolymer can be produced by subjecting a polysiloxane in which both terminals are capped with SiH (silicon atom-binding hydrogen atom) groups and an amine or silyl amine which has two aliphatic unsaturated bonds in one molecule to an addition reaction.

More particularly, the polysiloxane in which both terminals are capped with SiH groups represented by the following general formula: 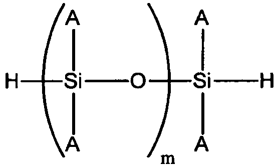 wherein
each A independently represents a monvalent hydrocarbon group having no aliphatic unsaturated bond; and m represents a number ranging from 1 to 1,000, inclusive,
and the amine or silylamine which has two aliphatic unsaturated bonds in one molecule represented by the following general formula: 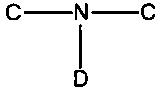 wherein
each C independently represents an aliphatic unsaturated bond-containing monvalent hydrocarbon group; and
D represents a hydrogen atom or a triorganosilyl group,
may be subjected to an addition reaction, and optionally a desilylation reaction is carried out, if necessary. Thereby, the aforementioned polysiloxane-hydrocarbylene aminohydrocarbylene multiblock copolymer can be synthesized.

The aforementioned monvalent hydrocarbon group having no aliphatic unsaturated bond is the same as those described above. As the aforementioned A, a methyl group is preferable.

Examples of the aforementioned aliphatic unsaturated bond-containing monvalent hydrocarbon group include, for example, a substituted or unsubstituted, and linear or branched monovalent hydrocarbon group having at least one aliphatic unsaturated bond. As examples thereof, mention may be made of alkenyl groups having 2 to 10 carbon atoms such as a vinyl group, an allyl group, a butenyl group, a hexenyl group, an octenyl group and the like; alkenyl aryl groups such as a vinylphenyl group and the like; and the like.

The number of carbon atoms of the aforementioned aliphatic unsaturated bond-containing monvalent hydrocarbon group is not particularly restricted, and preferably ranges from 2 to 30, more preferably ranges from 2 to 20, and further preferably ranges from 2 to 10. As the aforementioned C, a linear or branched alkenyl group is preferable, and an allyl group is, in particular, preferable.

As the aforementioned triorganosilyl group, a silyl group usually used as a protective group in an organic reaction can be used. As examples thereof, mention may be made of a trimethylsilyl group, a triethylsilyl group, a phenyldimethylsilyl group, a t-butyldimethylsilyl group and the like.

The aforementioned addition reaction can be carried out under the common conditions of a hydrosilylation reaction. In order to accelerate the addition reaction, a hydrosilylation catalyst is preferably used. The used catalyst is not particularly restricted. A transition metal of group VIII such as nickel, ruthenium, rhodium, palladium, iridium, platinum, or the like, or a compound thereof can be preferably used. As examples of the compounds thereof, mention may be made of a chloro complex, an olefin complex, an aldehyde complex, a ketone complex, a phosphine complex, a sulfide complex, a nitrile complex of a transition metal of group VIII and the like. Among these, a platinum-based catalyst such as platinum black, chloroplatinic acid, a platinum olefin complex, a platinum aldehyde complex, a platinum ketone complex or the like is preferable, and a platinum olefin complex is, in particular, preferable.

The aforementioned addition reaction can be carried out without any solvent, and can also be carried out in the presence of a solvent. As examples of usable solvents, mention may be made of aromatic hydrocarbons such as benzene, toluene, xylene and the like; aliphatic hydrocarbons such as hexane, heptane, cyclohexane and the like; ethers such as tetrahydrofuran, diethyl ether, and the like; ketones such as acetone, methyl ethyl ketone and the like; and esters such as ethyl acetate, butyl acetate and the like.

When the aforementioned D is a triorganosilyl group, after the addition reaction is completed, a desilylation reaction by means of an appropriate method such as hydrolysis, alcoholysis or the like should be carried out, and thereby, the silylamino group is converted into a secondary amino group.

An equivalent ratio between the aliphatic unsaturated bond and the SiH group ((aliphatic unsaturated bond)/(SiH group)) is not particularly restricted. In the case in which the aliphatic unsaturated bond is to remain at the terminal of the product, a ratio of (aliphatic unsaturated bond)/(SiH group) must be greater than 1. On the other hand, in the case in which the SiH group is to remain at the terminal of the product, a ratio of (aliphatic unsaturated bond)/(SiH group) must be smaller than 1. As the aforementioned ratio is close to 1, a product with an increased molecular weight is obtained. As the aforementioned ratio moves away from 1, a product with a reduced molecular weight is obtained. Therefore, by means of controlling the aforementioned ratio, a molecular weight of a product can be controlled.

The reaction method is preferably a method in which a mixture of a polysiloxane in which both terminals are capped with SiH groups and a hydrosilylation catalyst is heated, and an amine or silylamine which has two aliphatic unsaturated bonds in one molecule is gradually added dropwise thereto. On the other hand, a method, in which an amine or silylamine which has two aliphatic unsaturated bonds in one molecule, and a hydrosilylation catalyst are first mixed and heated, and subsequently, a polysiloxane in which both terminals are capped with SiH groups is added dropwise thereto, is not preferable, since the amino group is coordinated with platinum, and thereby it may be deactivated. In addition, in the case in which a polysiloxane in which both terminals are capped with SiH groups and an amine or silylamine which has two aliphatic unsaturated bonds in one molecule are mixed and heated, followed by adding a hydrosilylation catalyst thereto, a reaction occurs at once. For this reason, attention is sufficiently required to the runaway reaction.

In the case where the addition reaction on the basis of the hydrosilylation reaction is carried out as described above, a reaction development can be confirmed by infrared absorption spectrometry, nuclear magnetic resonance analysis, and the like. After the completion of the reaction is confirmed, materials having a low boiling point such as the solvent or the like are removed under reduced pressure by heating. Thereby, the desired polysiloxane-hydrocarbylene aminohydrocarbylene multiblock copolymer can be obtained.

In the addition reaction between the silicon atom-binding hydrogen atoms of the polysiloxane in which both terminals are capped with SiH groups and the aliphatic unsaturated bonds of the amine or silylamine which has two aliphatic unsaturated bonds in one molecule, both an alpha adduct and a beta adduct are produced, depending on addition modes of adding a hydrogen atom to the unsaturated bond. A ratio of the beta adduct and the alpha adduct can be assayed by means of a nuclear magnetic resonance analysis. In the case of using a diallylamine as the amine which has two aliphatic unsaturated bonds in one molecule, a ratio of the beta adduct and the alpha adduct is about 7:3 under the usual hydrosilylation conditions. Therefore, a ratio of (a propylene aminopropylene product):(a propylene aminomethylethylene product):(a methylethylene aminomethylethylene product) produced in the addition reaction may be about 49:42:9.

In this preparation method, no cyclic product as a by-product is produced. Therefore, the polysiloxane-hydrocarbylene aminohydrocarbylene multiblock copolymer can be easily obtained without producing a cyclic by-product.

As the aforementioned sugar acid, aldonic acid or uronic acid is preferable.

The aforementioned aldonic acid is preferably ribonic acid, arabinonic acid, xylonic acid, lyxonic acid, allonic acid, altronic acid, gluconic acid, mannoic acid, gulonic acid, idonic acid, galactonic acid, or talonic acid, and is more preferably gluconic acid.

The aforementioned uronic acid is preferably glucuronic acid, iduronic acid, galacturonic acid, or mannuronic acid, and is more preferably glucuronic acid.

As examples of the intramolecular dehydration cyclic product of the aforementioned sugar acid, mention may be made of a product obtained by intramolecular dehydration cyclizing aldonic acid or uronic acid. An aldonolactone or a uronolactone is preferable and gluconolactone is further preferable in view of easy availability.

The reaction between the polysiloxane-hydrocarbylene aminohydrocarbylene multiblock copolymer and the sugar acid or intramolecular dehydration cyclic product thereof can be carried out by mixing or suspending both the aforementioned components in the absence of a solvent or in the presence of a solvent, and preferably in the presence of a solvent and heating under stirring the mixture.

A ratio of the reaction equivalent amounts of the polysiloxane-hydrocarbylene aminohydrocarbylene multiblock copolymer and the sugar acid or intramolecular dehydration cyclic product thereof is not particularly restricted. The secondary amino group remaining in the polysiloxane-hydrocarbylene aminohydrocarbylene multiblock copolymer accelerates hydrolysis of the amide group produced by the reaction over time. For this reason, the amount of the latter is preferably stoichiometrically an equivalent amount or a small excess amount with respect to the amount of the former. Therefore, a preferable ratio is 1 ≤ (acid group)/(secondary amino group) < 1.5, and the ratio is preferably 1.3 or less.

As the aforementioned solvent, a polar solvent is preferable, and a lower alcohol such as methanol, ethanol, n-propyl alcohol, isopropyl alcohol or the like is preferably used. When water is present in the reaction system, an intramolecular dehydration cyclic product of the sugar acid is decomposed and the corresponding acid is produced. For this reason, a dried solvent in which moisture is removed from the reaction system is preferably used.

The reaction period varies depending on the presence or absence of a solvent, the type of solvent, the reaction temperature and the like. In the case of using a lower alcohol as the solvent, the reaction is preferably carried out for 3 to 10 hours at a reflux temperature.

By removing materials with a low boiling point such as the solvent and the like under reduced pressure, the desired polysiloxane-N,N-dihydrocarbylene sugar-modified multiblock copolymer, and preferably polysiloxane-N,N-dihydrocarbylene aldonic amide multiblock copolymer or polysiloxane-N,N-dihydrocarbylene uronic amide multiblock copolymer can be obtained as a highly viscous fluid to a gum product which is transparent to white turbid, depending on the chemical structure.

The copolymer of the present invention exhibits increased miscibility with water. For this reason, by dissolving or dispersing the copolymer of the present invention in water, a stable aqueous composition can be formed. The aforementioned aqueous composition can be produced by, for example, dissolving or dispersing the copolymer of the present invention in water by means of a common stirrer.

In addition, the copolymer of the present invention can be used as a surfactant and can stabilize an emulsifying state of an emulsion having an aqueous phase and an oil phase. In particular, the polymer of the present invention can reduce the particle size of the dispersion phase (oil phase or aqueous phase) in the continuous phase (aqueous phase or oil phase) of the emulsion. Therefore, an emulsion emulsified by means of the polymer of the present invention is stable for a long time. The aforementioned emulsion can be produced by emulsifying and/or dispersing components of the aqueous phase, components of the oil phase, and the copolymer of the present invention, and optionally another emulsifier, if necessary, by means of an emulsifying machine such as a homomixer, a homogenizer, a colloid mill, a combi mixer, an in-line-type continuous emulsifying machine, a vacuum emulsifying machine, an ultrasonic emulsifying machine, a continuous mixing device or the like.

Therefore, the copolymer of the present invention is suitable as a component of an aqueous composition or an emulsion composition.

In addition, the copolymer of the present invention has properties which the organopolysiloxane inherently has. For this reason, the copolymer of the present invention can be used as a component of a surface treating agent for fibers, woven textiles, non-woven textiles, leather, powders and the like, or as a component of paint or a cosmetic.

The surface treating agent of the present invention comprises the polysiloxane-N,N-dihydrocarbylene sugar-modified multiblock copolymer of the present invention. The blending amount of the aforementioned copolymer is not particularly restricted, and for example, may range from 0.1 to 99.9% by weight (mass) and may preferably range from 1 to 90% by weight (mass) of the total weight (mass) of the surface treating agent.

In the surface treating agent of the present invention, additives usually blended in a surface treating agent can be blended within a range which does not impair the effects of the present invention. For example, in the case of a surface treating agent for fibers, woven textiles, non-woven textiles, or leather, silicone compounds such as dimethylpolysiloxane, dimethylmethylphenylpolysiloxane, amino-modified dimethylpolysiloxane, epoxy-modified dimethylpolysiloxane, polyether-modified dimethylpolysiloxane, polycaprolactone-modified dimethylpolysiloxane, alpha-olefin-modified dimethylpolysiloxane, polysiloxane/polyoxyalkylene block copolymer and the like in various forms such as oil, resin, gum, rubber and the like; silane compounds, crosslinking agents, preservatives, salts, surfactants such as alkylbenzenesulfonic acid salts, polyoxyalkylene alkyl sulfuric acid esters, alkylsulfuric acid esters, alkanesulfonic acid salts, alkylethoxycarboxylic acid salts, succinic acid derivatives, alkylamine oxides, imidazoline type compounds, polyoxyethylene alkyl or alkenyl ethers, polyoxyethylene alkyl phenyl ethers, higher fatty acid alkanolamides or alkylene oxide adducts thereof and the like; and the like can be blended in appropriate amounts.

As examples of fiber materials to which the surface treating agent of the present invention can be applied, in view of quality of the materials, mention may be made of natural fibers such as cotton, linen, wool, silk, wood pulp, leather or the like; recycled fibers such as rayon, acetate, cupra, stable fiber, or the like; organic synthetic fibers such as polyester, polyamide, vinylon, polyacrylonitrile, polyethylene, polypropylene, polyester ether, polyvinylidene chloride, polyvinyl chloride, spandex or the like; inorganic synthetic fibers such as glass fibers, carbon fibers, silicon carbide fibers or the like; and the like. In addition, as examples thereof, in view of form, mention may be made of stable, filament, cane, string, woven textile, knit, nonwoven textile, resin-processed fiber, paper, synthetic leather and the like.

The surface treating agent of the present invention is adhered to the aforementioned fiber materials by means of a spray or the like, and subsequently dried to remove excess water and the like from the fiber materials, followed by heating, if necessary. Thereby, the desired treatment effects can be obtained. The drying step and the heating step may be carried out at the same time. The heating step may be carried out for 30 seconds to 20 minutes at 80 to 225°C, and preferably for 1 minute to 10 minutes at 100 to 180°C. When the heating step is carried out for the aforementioned ranged long time at the aforementioned ranged high temperature, effects of imparting flexibility and durability of the effects are improved, and therefore, this is preferable. However, there are disadvantages due to the heating step, such as increasing the cost, coloring fiber materials, and the like. Therefore, the heating conditions may be appropriately selected in accordance with a treatment device, usage of fibers and the like.

In the case of applying the surface treating agent of the present invention to powders, there is no restriction on the form thereof (sphere, bar, needle, plate, amorphous, spindle or the like), the particle size (aerosol, microparticle, pigment-grade particle, or the like), and the particle structure (porous, non-porous or the like) thereof. The average primary particle size of the powders preferably ranges from 1 nm to 100 µm.

As examples of the aforementioned powders, mention may be made of, for example, inorganic powders, organic powders, surfactant metal salt powders (metallic soaps), colored pigments, pearl pigments, metal powder pigments and the like. In addition, hybrid products of the aforementioned pigments can also be used.

More particularly, as examples of inorganic powders, mention may be made of titanium oxide, zirconium oxide, zinc oxide, cerium oxide, magnesium oxide, barium sulfate, calcium sulfate, magnesium sulfate, calcium carbonate, magnesium carbonate, talc, mica, kaolin, sericite, white mica, synthetic mica, phlogopite, lepidolite, black mica, lithia mica, silicic acid, silicic acid anhydride, aluminum silicate, sodium silicate, magnesium sodium silicate, magnesium silicate, aluminum magnesium silicate, calcium silicate, barium silicate, strontium silicate, metal salts of tungstic acid, hydroxyapatite, vermiculite, higilite, bentonite, montmorillonite, hectorite, zeolite, ceramic powder, dicalcium phosphate, alumina, aluminum hydroxide, boron nitride, and the like.

As examples of organic powders, mention may be made of polyamide powder, polyester powder, polyethylene powder, polypropylene powder, polystyrene powder, polyurethane powder, benzoguanamine powder, polymethylbenzoguanamine powder, polytetrafluoroethylene powder, poly(methyl methacrylate) powder, cellulose, silk powder, nylon powder, nylon 12, nylon 6, silicone powder, polymethylsilsesquioxane spherical powder, copolymers of styrene and acrylic acid, copolymers of divinylbenzene and styrene, vinyl resin, urea resin, phenol resin, fluorine resin, silicone resin, acrylic resin, melamine resin, epoxy resin, polycarbonate resin, microcrystalline fiber powder, starch powder, lauroyl lysine and the like.

As examples of surfactant metal salt powders, mention may be made of zinc stearate, aluminum stearate, calcium stearate, magnesium stearate, zinc myristate, magnesium myristate, zinc palmitate, zinc laurate, zinc cetylphosphate, calcium cetylphosphate, sodium zinc cetylphosphate, and the like.

As examples of colored pigments, mention may be made of inorganic red pigments such as red iron oxide, iron oxide, iron hydroxide, iron titanate and the like; inorganic brown pigments such as gamma-iron oxide and the like; inorganic yellow pigments such as yellow iron oxide, ocher, and the like; inorganic black iron pigments such as black iron oxide, carbon black and the like; inorganic purple pigments such as manganese violet, cobalt violet, and the like; inorganic green pigments such as chromium hydroxide, chromium oxide, cobalt oxide, cobalt titanate, and the like; inorganic blue pigments such as Prussian blue, ultramarine blue, and the like; laked pigments of tar pigments such as Red No. 3, Red No. 104, Red No. 106, Red No. 201, Red No. 202, Red No. 204, Red No. 205, Red No. 220, Red No. 226, Red No. 227, Red No. 228, Red No. 230, Red No. 401, Red No. 505, Yellow No. 4, Yellow No. 5, Yellow No. 202, Yellow No. 203, Yellow No. 204, Yellow No. 401, Blue No. 1, Blue No. 2, Blue No. 201, Blue No. 404, Green No. 3, Green No. 201, Green No. 204, Green No. 205, Orange No. 201, Orange No. 203, Orange No. 204, Orange No. 206, Orange No. 207 and the like, laked pigments of natural pigments such as carminic acid, laccaic acid, carthamin, brazilin, crocin and the like.

As examples of pearl pigments, mention may be made of titanium oxide-coated mica, titanium mica, iron oxide-coated titanium mica, titanium oxide-coated mica, bismuth oxychloride, titanium oxide-coated bismuth oxychloride, titanium oxide-coated talc, fish scale foil, titanium oxide-coated colored mica, and the like.

As examples of metal powder pigments, mention may be made of powders of metals such as aluminum, gold, silver, copper, platinum, stainless steel, and the like.

In addition, in the aforementioned powders, a part or all parts thereof may, in particular, preferably be subjected to a surface treatment such as a water-repellent treatment, a hydrophilic treatment or the like. In addition, composited products in which the aforementioned powders are mutually composited may be used. In addition, surface-treated products in which the aforementioned powders have been subjected to a surface treatment with a general oil agent, a silicone compound other than the copolymer of the present invention, a fluorine compound, a surfactant, a thickening agent or the like can also be used. One type thereof or two or more types thereof can be used, as necessary.

The water-repellant treatments are not particularly restricted. The aforementioned powders can be treated with various types of water-repellant surface treatment agents. As examples thereof, mention may be made of organosiloxane treatments such as a methylhydrogenpolysiloxane treatment, a silicone resin treatment, a silicone gum treatment, an acryl silicone treatment, a fluorinated silicone treatment and the like; metallic soap treatments such as a zinc stearate treatment and the like; silane treatments such as a silane-coupling agent treatment, an alkylsilane treatment and the like; fluorine compound treatments such as a perfluoroalkylsilane treatment, a perfluoroalkyl phosphate treatment, a perfluoro polyether treatment and the like; amino acid treatments such as an N-lauroyl-L-lysine treatment and the like; oil agent treatments such as a squalane treatment and the like; acryl treatments such as an alkyl acrylate treatment and the like. The aforementioned treatments can be used in combination of two or more types thereof.

As the aforementioned powders, silicone elastomer powders can also be used. The silicone elastomer powder is a crosslinked product of a linear diorganopolysiloxane mainly formed from a diorganosiloxane unit (D unit). The silicone elastomer powder can be preferably produced by crosslink-reacting an organohydrogenpolysiloxane having a silicon-binding hydrogen atom at the side chain or the terminal and a diorganopolysiloxane having an unsaturated hydrocarbon group such as an alkenyl group or the like at the side chain or the terminal, in the presence of a catalyst for a hydrosilylation reaction. The silicone elastomer powder has an increased flexibility and elasticity, and exhibits a superior oil-absorbing property, as compared with a silicone resin powder formed from T units and Q units. For this reason, the silicone elastomer powder absorbs sebum on the skin and can prevent makeup running. In addition, when a surface treatment is carried out using the aforementioned copolymer of the present invention, a moisturized feeling on touch can be imparted without reducing a suede-like feeling on touch of the silicone elastomer powder. In addition, in the case of blending the aforementioned copolymer of the present invention together with the silicone elastomer powder in a cosmetic, dispersion stability of the aforementioned powder in the entire cosmetic can be improved, and a stable cosmetic over time can be obtained.

The silicone elastomer powders can be in various forms such as a spherical form, a flat form, an amorphous form and the like. The silicone elastomer powders may be in the form of an oil dispersant. In the cosmetic of the present invention, silicone elastomer powders in the form of particles, which have a primary particle size observed by an electron microscope and/or an average primary particle size measured by a laser diffraction/scattering method ranging from 0.1 to 50 µm, and in which the primary particle is in a spherical form, can be preferably blended. In addition, the silicone elastomer constituting the silicone elastomer powders may have a hardness preferably not exceeding 80, and more preferably not exceeding 65, when measured by means of a type A durometer according to JIS K 6253 "Method for determining hardness of vulcanized rubber or thermoplastic rubber".

The silicone elastomer powders may be subjected to a surface treatment with a silicone resin, silica or the like. As examples of the aforementioned surface treatments, mention may be made of, for example, those described in Japanese Unexamined Patent Application, First Publication No. H02-243612; Japanese Unexamined Patent Application, First Publication No. H08-12545; Japanese Unexamined Patent Application, First Publication No. H08-12546; Japanese Unexamined Patent Application, First Publication No. H08-12524; Japanese Unexamined Patent Application, First Publication No. H09-241511; Japanese Unexamined Patent Application, First Publication No. H10-36219; Japanese Unexamined Patent Application, First Publication No. H11-193331; Japanese Unexamined Patent Application, First Publication No. 2000-281523 and the like. As the silicone elastomer powders, crosslinking silicone powders listed in "Japanese Cosmetic Ingredients Codex (JCIC)" correspond thereto. As commercially available products, there are Trefil E-506S, Trefil E-508, 9701 Cosmetic Powder, and 9702 Powder, manufactured by Dow Corning Toray Co., Ltd., and the like. As examples of the surface treatment agents, mention may be made of methylhydrogenpolysiloxane, silicone resins, metallic soap, silane-coupling agents, inorganic oxides such as silica, titanium oxide and the like and fluorine compounds such as perfluoroalkylsilane, perfluoroalkyl phosphoric ester salts and the like.

In the case of applying the surface treating agent of the present invention to powders, the aforementioned surface treating agent may be directly mixed with powders, or alternatively, the aforementioned surface treating agent may be dissolved in an organic solvent beforehand, and the solution may be mixed with powders, followed by drying and removing the organic solvent. As examples of the organic solvent, mention may be made of an aliphatic hydrocarbon such as hexane, octane, decane, cyclohexane or the like; an aromatic hydrocarbon such as benzene, toluene, xylene or the like; an ether such as diethyl ether, dibutyl ether, tetrahydrofuran, dioxane or the like; a ketone such as acetone, methyl ethyl ketone, methyl isobutyl ketone, diisobutyl ketone or the like; an ester such as methyl acetate, ethyl acetate, butyl acetate, isobutyl acetate or the like; and an alcohol such as methanol, ethanol, isopropanol, butanol or the like. The drying temperature preferably ranges from room temperature to 180°C.

The treating ratio of powders by means of the surface treating agent of the present invention is preferably a ratio in which the amount of the surface treating agent ranges from 0.1 to 30 parts by weight (mass) with respect to 100 parts by weight (mass) of the powders, and more preferably a ratio in which the amount of the surface treating agent ranges from 0.1 to 15 parts by weight (mass) with respect to 100 parts by weight (mass) of the powders.

The paint of the present invention comprises the polysiloxane-N,N-dihydrocarbylene sugar-modified multiblock copolymer of the present invention. The blending amount of the aforementioned copolymer is not particularly restricted, may range from 0.1 to 30% by weight (mass) and may preferably range from 1 to 20% by weight (mass) with respect to the total amount of the paint.

In the paint of the present invention, additives blended in common paint can be blended within a range which does not impair the effects of the present invention. As examples thereof, mention may be made of, for example, solvents such as water; alcohols such as methanol, ethanol, isopropanol, t-butanol, ethylene glycol, 1-methoxy-2-ethanol and the like; ketones such as acetone, methyl ethyl ketone, methyl isobutyl ketone, cyclohexanone and the like; ethers such as diethyl ether, dibutyl ether, tetrahydrofuran, dioxane and the like; esters such as ethyl acetate, isobutyl acetate and the like; aromatics such as toluene, xylene and the like; hydrocarbons such as n-hexane, cyclohexane and the like; nitrogen compounds such as N,N-dimethylformamide, acetonitrile and the like; sulfur compounds such as dimethylsulfoxide and the like; fluorinated hydrocarbons such as trichlorofluoromethane, dichlorodifluoromethane, dichlorotetrafluoroethane and the like; chlorinated and fluorinated hydrocarbons and the like. In addition thereto, liquefied gases such as lower hydrocarbons (LPG) such as propane, n-butane, isobutene and the like, carbon dioxide and the like; silicone compounds in various forms such as oils, resins, gums, rubbers, powders, and the like, such as dimethylpolysiloxane, dimethylmethylphenylpolysiloxane, dimethyldiphenylpolysiloxane, amino-modified dimethylpolysiloxane, epoxy-modified dimethylpolysiloxane, polyether-modified dimethylpolysiloxane, polycaprolactone-modified dimethylpolysiloxane, alpha-olefin-modified dimethylpolysiloxane, carboxyl-modified dimethylpolysiloxane and the like; surfactants such as alkylbenzensulfonic acid salts, polyoxyalkylene alkylsulfuric acid esters, alkylsulfuric acid esters, alkanesulfonic acid salts, alkylethoxycarboxylic acid salts, succinic acid derivatives, alkylamine oxides, imidazoline-type compounds, polyoxyethylene alkyl or alkenyl ethers, polyoxyethylene alkyl phenyl ethers, higher fatty acid alkanolamides or alkylene oxide adducts and the like; other polymer compounds such as hydroxyethylcellulose, hydroxypropylcellulose, hydroxypropylmethylcellulose, methylcellulose, cationated cellulose, cationated polymers, sodium poly(2-acrylamido-2-methylpropanesulfonate, cationic resins and acrylic resins disclosed in Japanese Unexamined Patent Application, First Publication No. H05-310538, polyamide, polyester, polyimide, polystyrene, phenol resins, alkyd resins and the like; antioxidants; UV absorbing agents; dyes; pigments; colorants; preservatives; fixing agents; and the like. The paint of the present invention is applied to the surface of various base materials via undercoating or via no undercoating, and thereby a (cured) coating film can be formed, the coating film exhibiting superior mold releasing properties, durability, non-transferring properties, anti-contamination properties and the like. The application method is not restricted, and common methods can be used. For example, coating can be carried out by means of brush, a bar coder or a spray. In addition, the paint of the present invention exhibits superior storage stability. In particular, in the case of applying the paint to the surface of a surface protective film of a printed-circuit board manuscript, a mold releasing layer suitable for preventing adhesion of photoresists or solder masks can be obtained. In this case, application by means of a spray is preferable in view of operation efficacy.

The cosmetic of the present invention comprises the polysiloxane-N,N-dihydrocarbylene sugar-modified multiblock copolymer of the present invention. The blending amount of the aforementioned copolymer is not particularly restricted, may range, for example, from 1 to 99% by weight (mass) and may preferably range from 10 to 90% by weight (mass), with respect to the total amount of the cosmetic.

As examples of other components blended in the cosmetics of the present invention, mention may be made of, for example, oil agents, hydrophilic medium, humectants, silicones, UV-ray blocking agents, water-soluble polymers, water-swellable clay minerals, preservatives, antimicrobial agents, physiologically active components, pH adjustors, organic solvents, antioxidants, chelating agents, perfumes, pigments, and the like.

The oil agents may be any one in the form of a solid, a semi-solid, or a liquid derived from any origins, as long as they are hydrophobic. The oil agents may be non-volatile, semi-volatile, or volatile. As examples thereof, mention may be made of silicone oils, hydrocarbon oils and waxes, animal or vegetable oils, higher alcohols, ester oils and the like. In particular, silicone oils are preferable since they can impart a refreshing sensation during use. The oil agents may be used as a single type or in combination with two or more types thereof. The blending amount of the oil agent in the cosmetic preferably ranges from 1 to 50% by weight (mass) with respect to the total weight (mass) of the cosmetic.

The molecular structure of the silicone oil may be any one of a cyclic structure, a linear structure, and a branched structure. The viscosity thereof at 25°C may range from 0.65 to 100,000 mm²/sec, and preferably ranges from 0.65 to 10,000 mm²/sec.

In particular, as examples of cyclic silicone oils, mention may be made of hexamethylcyclotrisiloxane (D3), octamethylcyclotetrasiloxane (D4), decamethylcyclopentasiloxane (D5), dodecamethylcyclohexasiloxane (D6), 1,1-diethylhexamethylcyclotetrasiloxane, phenylheptamethylcyclotetrasiloxane, 1,1-diphenylhexamethylcyclotetrasiloxane, 1,3,5,7-tetravinyltetramethylcyclotetrasiloxane, 1,3,5,7-tetramethylcyclotetrasiloxane, 1,3,5,7-tetracyclohexyltetramethylcyclotetrasiloxane, tris(3,3,3-trifluoropropyl)trimethylcyclotrisiloxane, 1,3,5,7-tetra(3-aminopropyl)tetramethylcyclotetrasiloxane, 1,3,5,7-tetra(N-(2-aminoethyl)3-aminopropyl)tetramethylcyclotetrasiloxane, 1,3,5,7-tetra(3-mercaptopropyl)tetramethylcyclotetrasiloxane, 1,3,5,7-tetra(3-glycidoxypropyl) tetramethylcyclotetrasiloxane, 1,3,5,7-tetra(3-methacryloxypropyl)tetramethylcyclotetrasiloxane, 1,3,5,7-tetra(3-acryloxypropyl)tetramethylcyclotetrasiloxane, 1,3,5,7-tetra(3-carboxypropyl)tetramethylcyclotetrasiloxane, 1,3,5,7-tetra(3-vinyloxypropyl)tetramethylcyclotetrasiloxane, 1,3,5,7-tetra(p-vinylphenyl)tetramethylcyclotetrasiloxane, 1,3,5,7-tetra[3-(p-vinylphenyl)propyl] tetramethylcyclotetrasiloxane, 1,3,5,7-tetra[3-(p-isopropenylbenzoylamino)propyl]tetramethylcyclotetrasiloxane, 1,3,5,7-tetra(N-methacryloyl-N-methyl-3-aminopropyl)tetramethylcyclotetrasiloxane, 1,3,5,7-tetra(N-lauroyl-N-methyl-3-aminopropyl)tetramethylcyclotetrasiloxane, 1,3,5,7-tetra(N-acryloyl-N-methyl-3-aminopropyl)tetramethylcyclotetrasiloxane, 1,3,5,7-tetra(N,N-bis(methacryloyl)-3-aminopropyl)tetramethylcyclotetrasiloxane, 1,3,5,7-tetra(N,N-bis(lauroyl)-3-aminopropyl) tetramethylcyclotetrasiloxane and the like.

As examples of linear silicone oils, mention may be made of a dimethylpolysiloxane in which both molecular terminals are capped with trimethylsiloxy groups, a methylphenylpolysiloxane in which both molecular terminals are capped with trimethylsiloxy groups, a copolymer of methylphenylsiloxane and dimethylpolysiloxane in which both molecular terminals are capped with trimethylsiloxy groups, a copolymer of methyl(3,3,3-trifluoropropyl)siloxane and dimethylsiloxane in which both molecular terminals are capped with trimethylsiloxy groups, an α,ω-dihydroxypolydimethylsiloxane, an α,ω-dimethoxypolydimethylsiloxane, a tetramethyl-1,3-dihydroxydisiloxane, an octamethyl-1,7-dihydroxytetrasiloxane, a hexamethyl-1,5-diethoxytrisiloxane, a hexamethyldisiloxane, an octamethyltrisiloxane, and the like.

As examples of branched silicone oils, mention may be made of a methyltristrimethylsiloxysilane, an ethyltristrimethylsiloxysilane, a propyltristrimethylsiloxysilane, a tetrakistrimethylsiloxysilane, a phenyltristrimethylsiloxysilane and the like.

Among these, a volatile one is preferable. The aforementioned silicone oils may be used in combination with two or more types thereof.

As examples of hydrocarbon oils and waxes, mention may be made of ozokerite, squalane, squalene, ceresin, paraffin, paraffin wax, liquid isoparaffin, pristane, polyisobutylene, polybutene, microcrystalline wax, vaseline and the like. They can be used in combination with two or more types thereof.

As examples of animal or vegetable oils, mention may be made of avocado oil, linseed oil, almond oil, ibota wax, perilla oil, olive oil, cacao butter, kapok wax, kaya oil, carnauba wax, liver oil, candelilla wax, beef tallow, hydrogenated beef tallow, beef bone tallow, cured beef tallow, apricot kernel oil, spermaceti wax, hydrogenated oil, wheat germ oil, sesame oil, rice germ oil, rice bran oil, sugar cane wax, sasanqua oil, safflower oil, shear butter, Chinese tung oil, cinnamon oil, jojoba wax, shellac wax, turtle oil, soybean oil, tea seed oil, camellia oil, evening primrose oil, corn oil, lard, rapeseed oil, Japanese tung oil, rice bran wax, germ oil, horse fat, persic oil, palm oil, palm kernel oil, castor oil, hydrogenated castor oil, castor oil fatty acid methyl ester, sunflower oil, grape oil, bayberry wax, jojoba oil, macadamia nut oil, beeswax, mink oil, cottonseed oil, cotton wax, Japanese wax, Japanese wax kernel oil, montan wax, coconut oil, hydrogenated coconut oil, tri-coconut oil fatty acid glyceride, mutton tallow, peanut oil, lanolin, liquid lanolin, reduced lanolin, lanolin alcohol, hard lanolin, lanolin acetate, lanolin fatty acid isopropyl ester, hexyl laurate, POE lanolin alcohol ether, POE lanolin alcohol acetate, lanolin fatty acid polyethylene glycol, POE hydrogenated lanolin alcohol ether, egg yolk oil and the like, with the proviso that POE means polyoxyethylene. They may be used in combination with two or more types thereof.

As examples of higher alcohols, mention may be made of lauryl alcohol, myristyl alcohol, palmityl alcohol, stearyl alcohol, behenyl alcohol, hexadecyl alcohol, oleyl alcohol, isostearyl alcohol, hexyldodecanol, octyldodecanol, cetostearyl alcohol, 2-decyltetradecinol, cholesterol, phytosterol, POE cholesterol ether, monostearyl glycerol ether (batyl alcohol), monooleyl glyceryl ether (selachyl alcohol) and the like. They may be used in combination with two or more types thereof.

As examples of ester oils, mention may be made of diisobutyl adipate, 2-hexyldecyl adipate, di-2-heptylundecyl adipate, N-alkylglycol monoisostearate, isocetyl isostearate, trimethylolpropane triisosteatate, ethylene glycol di-2-ethylhexanoate, cetyl 2-ethylhexanoate, trimethylolpropane tri-2-ethylhexanoate, pentaerythritol tetra-2-ethylhexanoate, cetyl octanoate, octyldodecyl gum ester, oleyl oleate, octyldodecyl oleate, decyl oleate, isononyl isononanoate, neopentylglycol dicaprate, triethyl citrate, 2-ethylhexyl succinate, amyl acetate, ethyl acetate, butyl acetate, isocetyl stearate, butyl stearate, diisopropyl sebacate, di-2-ethylhexyl sebacate, cetyl lactate, myristyl lactate, isopropyl palmitate, 2-ethylhexyl palmitate, 2-hexyldecyl palmitate, 2-heptylundecyl palmitate, cholesteryl 12-hydroxystearate, dipentaerythritol fatty acid ester, isopropyl myristate, 2-ethylhexyl myristate, octyldodecyl myristate, 2-heptylundecyl myristate, meristyl myristate, hexyldecyl dimethyloctanoate, ethyl laurate, hexyl laurate, 2-octyldodecyl N-lauroyl-L-glutamate, diisostearyl malate and the like. As examples of glyceride oils, mention may be made of acetoglyceryl, glyceryl triisooctanoate, glyceryl triisostearate, glyceryl triisopalmitate, glyceryl tri(caprylate/caprate), glyceryl monostearate, glyceryl di-2-heptylundecanoate, glyceryl trimyristate, diglyceryl myristate isostearate, and the like. They may used in combination with two or more types thereof.

As examples of hydrophilic media, mention may be made of moonovalent lower alcohols such as ethanol, n-propanol, isopropanol, n-butanol and the like; divalent alcohols such as 1,3-butylene glycol, ethylene glycol, propylene glycol, and the like; polyalkylene glycols such as polyethylene glycol, dipropylene glycol, polypropylene glycol, and the like; polyhydric alcohols such as glycerol, diglycerol, trimethylolpropane, pentaerythritol, sorbitol and the like. They may be used in combination with two or more types thereof. The blending amount of the aforementioned hydrophilic medium in the cosmetic preferably ranges from 1 to 80% by weight (mass) with respect to the total amount of the cosmetic.

As examples of humectants, mention may be made of glucose, xylitol, maltitol, hyaluronic acid, chondroitin sulfate, pyrrolidone carboxylic acid salts, polyoxyethylene methylglucoside, polyoxypropylene methylglucoside, and the like. They may be used in combination with two or more types thereof. The aforementioned hydrophilic media such as 1,3-butylene glycol, ethylene glycol, polyethylene glycol, propylene glycol, dipropylene glycol, polypropylene glycol, glycerol, diglycerol, trimethylolpropane, pentaerythritol, sorbitol and the like, which are also hydrophilic medium, may also assist for improvement of a moisturizing sensation of the cosmetic in some cases. The blending amount of the humectant in the cosmetic preferably ranges from 0.1 to 30% by weight (mass) with respect to the total weight (mass) of the cosmetic.

As examples of silicones, mention may be made of, for example, silicone gums, silicone resins and silicone elastomer powders. They may be used in combination with two or more types thereof.

The silicone gum is a linear diorganopolysiloxane having an ultra-high degree of polymerization, and is also referred to as a silicone raw rubber or an organopolysiloxane gum. As a representative example, one represented by (CH₃)₃SiO{(CH₃)₂SiO}_{f}{(CH₃)R⁷SiO}_{g}Si(CH₃)₃ wherein R⁷ is selected from a vinyl group, a phenyl group, an alkyl group having 6 to 20 carbon atoms, an aminoalkyl group having 3 to 15 carbon atoms, a perfluoroalkyl group having 3 to 15 carbon atoms, and an alkyl group containing a quaternary ammonium base having 3 to 15 carbon atoms; f = 3000 to 6000; and g = 0 to 1000, f + g = 3,000 to 6,000. They may be used in combination with two or more types thereof.

The silicone resin is an organopolysiloxane having a highly branched structure, a net-like structure or a cage-like structure, which is in the form of a liquid or a solid at room temperature. As examples of solid silicone resins, mention may be made of, for example, MQ resins, MDQ resins, MTQ resins, MDTQ resins, TD resins, TQ resins, or TDQ resins comprising any combinations of a triorganosiloxy unit (M unit) (wherein the organo group is a methyl group alone, or a methyl group in combination with a vinyl group or a phenyl group), a diorganosiloxy unit (D unit) (wherein the organo group is a methyl group alone, or a methyl group in combination with a vinyl group or a phenyl group), a monoorganosiloxy unit (T unit) (wherein the organo group is a methyl group, a vinyl group or a phenyl group), and a siloxy unit (Q unit). In addition, as other examples thereof, mention may be made of trimethylsiloxysilicic acid, polyalkylsiloxysilicic acid, trimethylsiloxysilicic acid containing dimethylsiloxy units and alkyl(perfluoroalkyl) siloxysilicic acid. The aforementioned silicone resins are preferably oil soluble, and, in particular, preferably are soluble in octamethyltetrasiloxane (D4) or decamethylcyclopentasiloxane (D5). They may be used in combination with two or more types thereof.

The silicone gums and silicone resins may be blended in cosmetics alone, and may also be dissolved in a volatile or non-volatile silicone oil, or a volatile or non-volatile hydrocarbon oil, followed by blending in cosmetics. The blending amount of the silicone gum and silicone resin preferably ranges from 0.1 to 20% by weight (mass), and more preferably ranges from 1 to 10% by weight (mass) of the total amount of the cosmetic. In order to obtain a cosmetic exhibiting an increased adhesiveness to the skin, the silicone gum or silicone resin may be preferably blended in an amount ranging from 50 to 500 parts by weight (mass) with respect to 100 parts by weight (mass) of the cosmetic.

The silicone elastomer powders are crosslinked products of a linear diorganopolysiloxane as a main component, and can be in various forms such as a spherical form, a flat form, an amorphous form and the like. The silicone elastomer powders in the form of particles, which have a primary particle size when observed by an electron microscope and/or an average primary particle size measured by a laser diffraction/scattering method ranging from 0.1 to 50 µm, and in which the primary particle is in a spherical form, can be preferably blended. In addition, the silicone elastomer constituting the silicone elastomer powders may have a hardness preferably not exceeding 80, and more preferably not exceeding 65, when measured by means of a type A durometer according to JIS K 6253 "Method for determining hardness of vulcanized rubber or thermoplastic rubber". The silicone elastomer powders may be used in combination with two or more types thereof.

The silicone elastomer powders can be produced by, for example, curing a composition comprising a diorganopolysiloxane containing two or more alkenyl groups, an alkylhydrogenpolysiloxane having two or more silicon atom-binding hydrogen atoms, and chloroplatinic acid, in an emulsified state or a sprayed state. As examples of diorganopolysiloxane containing two or more alkenyl groups, mention may be made of, for example, a dimethylpolysiloxane in which both terminals are capped with dimethylvinylsiloxy groups. Organic compounds having two or more vinyl groups or allyl groups in a molecule, such as alpha,omega-alkenyldiene, glycerol triallyl ether, polyoxyalkynylated glycerol triallyl ether, trimethylolpropane triallyl ether, polyoxyalkynylated trimethylolpropane triallyl ether and the like, may be used.

As examples of the silicone elastomer powders, mention may be made of, for example, those described in Japanese Unexamined Patent Application, First Publication No. H02-243612; Japanese Unexamined Patent Application, First Publication No. H08-12545; Japanese Unexamined Patent Application, First Publication No. H08-12546; Japanese Unexamined Patent Application, First Publication No. H08-12524; Japanese Unexamined Patent Application, First Publication No. H09-241511; Japanese Unexamined Patent Application, First Publication No. H10-36219; Japanese Unexamined Patent Application, First Publication No. H11-193331; Japanese Unexamined Patent Application, First Publication No. 2000-281523 and the like. As commercially available products, there are Trefil E-505, E-506, E-507, or E-508 of Trefil E series manufactured by Dow Corning Toray Co., Ltd., and the like. As the silicone elastomer powders, crosslinking silicone powders listed in "Japanese Cosmetic Ingredients Codex (JCIC)" correspond thereto. The aforementioned silicone elastomer powders may be subjected to a surface treatment. As examples of the surface treatment agents, mention may be made of methylhydrogenpolysiloxane, silicone resins, metallic soap, silane-coupling agents, inorganic oxides such as silica, titanium oxide and the like and fluorine compounds such as perfluoroalkylsilane, perfluoroalkyl phosphoric ester salts and the like.

The silicone elastomer powders in the form of a paste which is a kneaded product with an oil component or an aqueous dispersion are preferably blended in a cosmetic. More particularly, as examples thereof, mention may be made of a product in the form of a paste obtained by kneading the silicone elastomer powders and an oil agent which is liquid at room temperature and is selected from the group consisting of an ester oil, a hydrocarbon oil, a higher alcohol and an animal or vegetable oil; and a dispersion obtained by dispersing the silicone elastomer powders in water containing an emulsifying agent.

Many silicone elastomer powders have a particle size exceeding 10 µm, and it is difficult to stably blend them in an aqueous composition. The silicone elastomer powders can be stably blended by using together with the amino-modified organopolysiloxane emulsion of the present invention. The blending amount of the organopolysiloxane elastomer powders in the cosmetic preferably ranges from 0.1 to 30% by weight (mass) of the total weight (mass) of the cosmetic.

As the silicones, a silicone-modified organic polymer may be blended. As examples of silicone-modified organic polymers, mention may be made of, for example, a polydimethylsiloxane grafted acryl-based copolymer, a carboxysiloxane dendrimer grafted acryl-based copolymer disclosed in Japanese Unexamined Patent Application, First Publication No. 2000-063225, an acryl-based copolymer having a fluorinated organic group and a carboxysiloxane dendrimer structure disclosed in Japanese Unexamined Patent Application, First Publication No. 2003-226611. They may be used in combination with two or more types thereof.

The UV-ray blocking agent may be any one of an inorganic UV screening agent or an organic UV screening agent. The inorganic UV screening agent is typically an inorganic powder. As examples thereof, mention may be made of, for example, metal oxides such as titanium oxide, zinc oxide, cerium oxide, titanium suboxide, iron-doped titanium oxides and the like; metal hydroxides such as iron hydroxides and the like; metal flakes such as platy iron oxide, aluminum flake and the like; and ceramics such as silicon carbide and the like. Among these, at least one type of a material selected from fine particulate metal oxides and fine particulate metal hydroxides with an average particle size ranging from 1 to 100 nm is, in particular, preferable. They may be used in combination with two or more types thereof. The aforementioned powders are preferably subjected to conventional surface treatments such as fluorine compound treatments, among which a perfluoroalkyl phosphate treatment, a perfluoroalkylsilane treatment, a perfluoropolyether treatment, a fluorosilicone treatment, a fluorinated silicone resin treatment are preferable; silicone treatments, among which a methylhydrogenpolysiloxane treatment, a dimethylpolysiloxane treatment, and a vapor-phase tetramethyltetrahydrogencyclotetrasiloxane treatment are preferable; silicone resin treatments, among which a trimethylsiloxysilicic acid treatment is preferable; pendant treatments which are methods of adding alkyl chains after the vapor-phase silicone treatment; silane-coupling agent treatments; titanium-coupling agent treatments; silane treatments among which an alkylsilane treatment and an alkylsilazane treatment are preferable; oil agent treatments; N-acylated lysine treatments; polyacrylic acid treatments; metallic soap treatments in which a stearic acid salt or a myristic acid salt is preferably used; acrylic resin treatments; metal oxide treatments and the like. Multiple treatments described above are preferably carried out. For example, the surface of the fine particulate titanium oxide can be coated with a metal oxide such as silicon oxide, alumina or the like, and then, a surface treatment with an alkylsilane can be carried out. The total amount of the material used for the surface treatment may preferably range from 0.1 to 50% by weight (mass) based on the amount of the powder.

As examples of organic UV screening agents, mention may be made of, for example, salicylic acid-based UV screening agents such as homomenthyl salicylate, octyl salicylate, salicylic acid triethanolamine and the like; benzoic acid-based UV screening agents such as paraaminobenzoic acid, ethyl dihydroxypropyl paraaminobenzoic acid, glyceryl paraaminobenoic acid, octyl dimethyl paraaminobenzoic acid, amyl paraaminobenzoate, 2-ethylhexyl paradimethylaminobenzoate and the like; benzophenone-based UV screening agents such as 4-(2-beta-glucopyranoxy)propoxy-2-hydroxybenzophenone, dihydroxydimethoxybenzophenone, sodium dihydroxydimethoxybenzophenone disulfonate, 2-hydroxy-4-methoxybenzophenone, hydroxymethoxybenzophenone sulfonic acid and trihydrate salt thereof, sodium hydroxymethoxybenzophenone sulfonate, 2-hydroxy-4-methoxybenzophenone 5-sulfonate, 2,2'-dihydroxy-4-methoxybenzophenone, 2,4-dihydroxybenzophenone, 2,2',4,4'-tetrahydroxybenzophenone, 2,2'-dihydroxy-4,4'-dimethoxybenzophenone, 2-hydroxy-4-n-octoxybenzophenone, and the like; cinnamic acid-based UV screening agents such as 2-ethylhexyl p-methoxycinnamate (alternatively named: octyl p-methoxycinnamate), glyceryl mono-2-ethylhexanoyl-diparamethoxycinnamate, methyl 2,5-diisopropylcinnamate, 2,4,6-tris[4-(2-ethylhexyloxycarbonyl)anilino]-1,3,5-triazine, methylbis(trimethylsiloxy)silyl]isopentyl trimethoxycinnamate, cinnamic ester mixtures of isopropyl paramethoxycinnamate and diisopropyl paramethoxycinnamate, paramethoxyhydrocinnamic acid diethanolamine salt and the like; benzoylmethane-based UV screening agents such as 2-phenyl-benzimidazole 5-sulfuric acid, 4-isopropyldibenzoylmethane, 4-t-butyl-4'-methoxy-benzoylmethane and the like; 2-ethylhexyl 2-cyano-3,3-diphenylprop-2-enoate (INCI: octocrylene), 2-ethylhexyl dimethoxybenzylidene dioxoimidazolidine propipnate, 1-(3,4-dimethoxyphenyl)-4,4-dimethyl-1,3-pentanedione, cinoxate, methyl-o-aminobenzoate, 2-ethylhexyl-2-cyano-3,3-diphenylacrylate, 3-(4-methylbenzylidene)camphor, octyltriazone, 2-ethylhexyl 4-(3,4-dimethoxyphenylmethylene)-2,5-dioxo-1-imidazolidine propionate, polymer derivatives thereof and silane derivatives thereof. They may be used in combination of two or more types thereof.

A product in which the organic UV screening agent is dispersed in polymer powders may be used. The polymer powder may be hollow or solid, may have an average primary particle size thereof ranging from 0.1 to 50 µm and may have a particle size distribution thereof of either broad or sharp. As examples of the polymers, mention may be made of acrylic resins, methacrylic resins, styrene resins, polyurethane resins, polyethylene, polypropylene, polyethylene terephthalate, silicone resins, nylons, acrylamide resins, and the like. Polymer powders containing the organic UV screening agent in an amount ranging from 0.1 to 30% by weight (mass) with respect to the amount of the powder are preferable. Polymer powders containing 4-tert-butyl-4'-methoxydibenzoylmethane, which is a UV-A absorber, are particularly preferable.

As the UV-ray blocking agent, at least one type selected from the group consisting of fine particulate titanium oxide, fine particulate zinc oxide, 2-ethylhexyl paramethoxycinnamate, 4-tert-butyl-4'-methoxydibenzoylmethane, and benzophenone-based UV-ray absorbers is commonly used since they are easily commercially available and increased effects of controlling UV rays are exhibited. Therefore, they can be preferably used. In particular, the inorganic UV screening agent and the organic UV screening agent are preferably used together. In addition, the UV screening agent for UV-A and the UV screening agent for UV-B are more preferably used together. The blending amount of the UV screening agent of the total of the inorganic and/or organic UV screening agents in the cosmetic preferably ranges from 0.1 to 60% by weight (mass) and more preferably ranges from 3 to 40% by weight with respect to the total amount of the cosmetic. In addition, the blending amount of the inorganic UV screening agent preferably ranges from 0.1 to 30% by weight of the amount of the cosmetic, and the blending amount of the organic UC screening agent preferably ranges from 0.1 to 20% by weight of the amount of the cosmetic.

As examples of the water-soluble polymer, mention may be made of amphoteric, cationic, anionic or nonionic water-soluble polymers. They may be used in combination with two or more types thereof.

As examples of amphoteric water-soluble polymers, mention may be made of, for example, amphoterized starches; dimethyldiallylammonium chloride derivatives such as a copolymer of acrylamide, acrylic acid, and dimethyldiallylammonium chloride, and a copolymer of acrylic acid and dimethyldiallylammonium chloride; and methacrylic acid derivatives such as polymethacryloylethyl dimethylbetaine, and a copolymer of N-methacryloyloxyethyl N,N-dimethylammonium α-methylcarboxybetaine and alkyl methacrylate.

As examples of the cationic water-soluble polymers, mention may be made of quaternary nitrogen-modified polysaccharides such as cation-modified cellulose, cation-modified hydroxyethylcellulose, cation-modified guar gum, cation-modified locust bean gum, cation-modified starch and the like; dimethyldiallylammonium chloride derivatives such as a copolymer of dimethyldiallylammonium chloride and acrylamide, poly(dimethylmethylene piperidinium chloride) and the like; vinylpyrrolidone derivatives such as a salt of a copolymer of vinylpyrrolidone and dimethylaminoethyl methacrylic acid, a copolymer of vinylpyrrolidone and methacrylamide propyltrimethylammonium chloride, a copolymer of vinylpyrrolidone and methylvinylimidazolium chloride and the like; and methacrylic acid derivatives such as a copolymer of methacryloylethyldimethylbetaine, methacryloylethyl trimethylammonium chloride and 2-hydroxyethyl methacrylate, a copolymer of methacryloylethyldimethylbetaine, methacryloylethyl trimethylammonium chloride and methoxy polyethylene glycol methacrylate, and the like.

As examples of anionic water-soluble polymers, mention may be made of, for example, polyacrylic acid or alkali metal salts thereof, polymethacrylic acid or alkali metal salts thereof, hyaluronic acid or alkali metal salts thereof, acetylated hyaluronic acid or alkali metal salts thereof, water-soluble polymers of aliphatic carboxylic acids or metal salts thereof such as hydrolysates of copolymers of methyl vinyl ether and maleic anhydride and the like, carboxymethylcellolose or alkali metal salts thereof, methyl vinyl ether-maleic acid half ester copolymers, acrylic resin alkanolamine liquid, carboxyvinyl polymers and the like. They may be used in combination with two or more types thereof.

As examples of nonionic water-soluble polymers, mention may be made of, for example, polyvinylpyrrolidone, highly polymerized polyethylene glycol, vinylpyrrolidone/vinyl acetate copolymer, vinylpyrrolidone/dimethylaminoethyl methacrylate copolymer, vinylcaprolactam/vinylpyrrolidone/dimethylaminoethyl methacrylate copolymer, cellulose or derivatives thereof such as methylcellulose, ethylcellulose, hydroxyethylcellulose, hydroxypropylcellulose, and carboxymethylcellulose), natural polymers such as keratin and collagen or derivatives thereof, calcium alginate, pullulan, agar, gelatin, tamarind seed polysaccharides, xanthan gum, carrageenan, high methoxyl pectin, low methoxyl pectin, guar gum, pectin, gum Arabic, crystalline cellulose, arabinogalactan, karaya gum, tragacanth gum, alginic acid, albumin, casein, curdlan, gellan gum, dextran, quince seed gum, chitin chitosan derivatives, starch (rice, corn, potato, or wheat), and the like. They may be used in combination with two or more types thereof.

The water-soluble polymer is preferably mixed with other raw materials of the cosmetic after the water-soluble polymer is dissolved or dispersed in water to form a uniform aqueous solution or dispersion. The blending amount of the water-soluble polymer in the cosmetic preferably ranges from 0.001 to 5% by weight (mass), and more preferably ranges from 0.01 to 3% by weight (mass) of the amount of the cosmetic. In the case of the blending amount of the water-soluble polymer being less than 0.001% by weight (mass), sufficient effects of thickening may not be obtained. On the other hand, in the case of the blending amount of the water-soluble polymer exceeding 5% by weight (mass), the viscosity of the cosmetic is too high and a sensation during use may be impaired.

The water-swellable clay mineral is one type of colloid-containing aluminum silicates having a triple layer structure, and examples thereof include, for example, those represented by the following formula: (X,Y)₂-3 (Si,Al)₄O₁₀(OH)₂Z_{1/3}.nH₂O, wherein X is Al, Fe(III), Mn(III) or Cr(III); Y is Mg, Fe(II), Ni, Zn or Li; and Z is K, Na or Ca. As examples of the aforementioned water-swellable clay minerals, mention may be made of bentonite, montmorillonite, beidellite, nontronite, saponite, hectorite, and aluminum magnesium silicate. They may be any one of natural ones and synthesized ones. They may be used in combination with two or more types thereof.

The water-swellable clay mineral is preferably mixed with other raw materials of the cosmetic after the water-swellable clay mineral is dissolved or dispersed in water to form a uniform aqueous solution or dispersion. The blending amount of the water- swellable clay mineral in the cosmetic preferably ranges from 0.001 to 5% by weight (mass), and more preferably ranges from 0.01 to 3% by weight (mass) of the amount of the cosmetic. In the case of the blending amount of the swellable clay mineral being less than 0.001% by weight (mass), sufficient effects of thickening may not be obtained. On the other hand, in the case of the blending amount of the swellable clay mineral exceeding 5% by weight (mass), the viscosity of the cosmetic is too high and a sensation during use may be impaired.

As examples of preservatives, mention may be made of alkyl paraoxybenzoates, benzoic acid, sodium benzoate, sorbic acid, potassium sorbate, phenoxyethanol and the like. They may be used in combination with two or more types thereof. The blending amount of the preservative(s) preferably ranges from 0.1 to 5% by weight (mass) of the total weight (mass) of the cosmetic.

As examples of the antimicrobial agents, mention may be made of benzoic acid, salicylic acid, carbolic acid, sorbic acid, alkyl paraoxybenzoates, parachloromethacresol, hexachlorophene, benzalkonium chloride, chlorhexidine chloride, trichlorocarbanilide, trichlosan, photosensitizers, phenoxyethanol, methylisothiazolinone and the like. They may be used in combination with two or more types thereof. The blending amount of the antimicrobial agent(s) preferably ranges from 0.1 to 5% by weight (mass) of the total weight (mass) of the cosmetic.

As examples of physiologically active components, mention may be made of, for example, anti-inflammatory agents, antiaging agents, astringents, hair growing agents, hair tonics, blood circulation accelerators, drying agents, agents for feeling cool, calefacients, vitamins, amino acids, wound healing accelerators, irritation relievers, analgesics, cell activators, and enzyme components. Among these, those consisting of natural plant extracted components, seaweed extracted components, or herbal medicine components are preferable. One type or two or more types of the aforementioned physiologically active components are preferably blended in the cosmetic. The blending amount of the physiologically active components in the cosmetic preferably ranges from 0.1 to 10% by weight (mass) of the total weight (mass) of the cosmetic.

As examples thereof, mention may be made of, for example, *Angelica keiskei* extract, avocado extract, *Hydrangea serrata* extract, *Althaea officinalis* extract, *Arnica montana* extract, aloe extract, apricot extract, apricot kernel extract, *Gingko biloba* extract, fennel fruit extract, turmeric root extract, oolong tea extract, *Rosa multiflora* extract, *Echinacea angustifolia* leaf extract, *Scutellaria baicalensis* root extract, *Phellodendron amurense* bark extract, *Coptis rhizome* extract, *Hordeum vulgare* seed extract, *Hypericum perforatum* extract, *Lamium album* extract, *Nasturtium officinale* extract, orange extract, dried sea water solution, seaweed extract, hydrolyzed elastin, hydrolyzed wheat powders, hydrolyzed silk, *Chamomilla recutita* extract, carrot extract, *Artemisia capillaris* flower extract, *Glycyrrhiza glabra* extract, *Hibiscus sabdariffa* extract, *Pyracantha fortuneana* extract, kiwi extract, *Cinchona succirubra* extract, cucumber extract, guanosine, *Gardenia florida* extract, *Sasa veitchii* extract, *Sophora angustifolia* extract, walnut extract, grapefruit extract, *Clematis vitalba* leaf extract, chlorella extract, *Morus alba* extract, *Gentiana lutea* extract, black tea extract, yeast extract, burdock extract, fermented rice bran extract, rice germ oil, *Symphytum officinale* leaf extract, collagen, *Vaccinum vitis idaea* extract, *Asiasarum sieboldi* extract, *Bupleurum falcatum* extract, umbilical extract, *Punica granatum* extract, *Salvia* extract, *Crocus sativus* flower extract, sasa bamboo grass extract, *Crataegus cuneata* fruit extract, *Zanthoxylum piperitum* extract, *Corthellus shiitake* extract, *Rehmannia chinensis* root extract, *Lithospermum erythrorhizone* root extract, *Perilla ocymoides* extract, *Tilia cordata* extract, *Spiraea ulmaria* extract, *Paeonia albiflora* extract, *Acorns calamus* root extract, *Betula alba* extract, *Equisetum arvense* extract, *Hedera helix* extract, *Crataegus oxyacantha* extract, *Sambucus nigra* extract, *Achillea millefolium* extract, *Mentha piperita* leaf extract, sage extract, *Malva sylvestris* extract, *Cnidium officinale* root extract, *Swertia japonica* extract, soybean seed extract, *Zizyphus jujuba* fruit extract, thyme extract, *Camellia sinensis* leaf extract, *Eugenia caryophyllus* flower extract, *Imperata cylindrica* extract, *Citrus unshiu* peel extract, *Angelica acutiloba* root extract, *Calendula officinalis* extract, *Prunus persica* kernel extract, *Citrus aurantium* peel extract, *Houttuynia cordata* extract, tomato extract, natto extract, carrot extract, garlic extract, *Rosa canina* fruit extract, hibiscus extract, *Ophiopogon japonicus* root extract, *Nelumbo nucifera* extract, parsley extract, honey, *Hamamelis virginiana* extract, *Parietaria officinalis* extract, *Isodon trichocarpus* extract, bisabolol, *Eriobotrya japonica* extract, *Tussilago farfara* flower extract, *Petasites japonicus* extract, *Poria cocos* extract, *Ruscus aculeatus* root extract, grape extract, propolis, *Luffa cylindrica* fruit extract, safflower flower extract, peppermint extract, *Tillia miquellana* extract, *Paeonia suffruticosa* root extract, *Humulus lupulus* extract, *Pinus sylvestris* cone extract, horse chestnut extract, *Lysichiton camtschatcense* extract, *Sapindus mukurossi* peel extract, *Melissa officinalis* leaf extract, peach extract, *Centaurea cyanus* flower extract, *Eucalyptus globulus* leaf extract, *Saxifraga sarementosa* extract, *Citrus junos* extract, *Coix lacryma-jobi* seed extract, *Artemisia princeps* extract, lavender extract, apple extract, lettuce extract, lemon extract, *Astragalus sinicus* extract, rose extract, rosemary extract, *Roman chamomile* extract, royal jelly extract, and the like.

In addition, as examples thereof, mention may be made of biopolymers such as deoxyribonucleic acid, mucopolysaccharides, sodium hyaluronate, sodium chondroitin sulfate, collagen, elastin, chitin, chitosan, hydrolyzed egg shell membranes, and the like; amino acids such as glycin, valine, leucine, isoleucine, serine, threonine, phenylalanine, arginine, lysine, aspartic acid, glutamic acid, cystine, cysteine, methionine, tryptophan and the like; hormones such as estradiol, ethenyl estradiol and the like; oil-based components such as sphingo lipids, ceramides, cholesterols, cholesterol derivatives, phospholipids, and the like; anti-inflammatory agents such as ε-aminocaproic acid, glycyrrhizinic acid, β-glycyrrhetinic acid, lysozyme chloride, guaiazulene, hydrocortisone, allantoin, tranexamic acid, azulene and the like; vitamins such as vitamins A, B2, B6, C, D, and E, calcium pantothenate, biotin, nicotinic amide, vitamin C esters and the like; active components such as allantoin, diisopropylamine dichloroacetate, 4-aminomethylcyclohexanecarboxylic acid and the like; cell activators such as alpha-hydroxy acid, beta-hydroxy acid and the like; blood circulation accelerators such as gamma-orizanol, vitamin E derivatives and the like; wound healing agents such as retinol, retinol derivatives and the like; algefacients such as cepharanthine, licorice extracts, capsicum tincture, hinokitiol, iodized garlic extracts, pyridoxine hydrochloride, dl-alpha-tocopherol, dl-alpha-tocopherol acetate, nicotinic acid, nicotinic acid derivatives, calcium panthothenate, D-panthothenyl alcohol, acetyl panthothenyl ethyl ether, biotin, allantoin, isopropylmethylphenol, estradiol, ethynyl estradiol, capronium chloride, benzalkonium chloride, diphenhydramine chloride, takanal, camphor, salicylic acid, nonylic acid vanillylamide, nonanoic acid vanillylamide, piroctone olamine, glyceryl pentadecanoate, 1-menthol, camphor and the like; hair growing agents such as mononitroguaiacol, resorcinol, gamma-amino butyric acid, benzethonium chloride, mexiletine hydrochloride, auxin, female hormone, cantharis tincture, cyclosporine, zinc pyrithione, hydrocortisone, minoxidil, polyoxyethylene sorbitan monostearate, mint oil, Sasanishiki (variety of rice) extract, and the like; and the like.

As examples of pH adjustors, mention may be made of, for example, lactic acid, citric acid, glycolic acid, succinic acid, tartaric acid, *dl*-malic acid, potassium carbonate, sodium hydrogencarbonate, ammonium hydrogencarbonate and the like. They may be used in combination with two or more types thereof. The blending amount of the pH adjustor in the cosmetic preferably ranges from 0.1 to 5% by weight (mass) with respect to the total weight (mass) of the cosmetic.

As examples of organic solvents, mention may be made of, for example, ethers, and as examples of propellants, mention may be made of LPG, N-methylpyrrolidone, and next-generation chlorofluorocarbon. They may be used in combination with two or more types thereof. The blending amount of the organic solvent in the cosmetic preferably ranges from 0.1 to 5% by weight (mass) with respect to the total weight (mass) of the cosmetic.

As examples of oxidation inhibitors (antioxidants), mention may be made of, for example, tocopherol, butylhydroxyanisole, dibutylhydroxytoluene, phytic acid, carotenoid, flavonoid, tannin, lignan, saponin and the like. They may be used in combination with two or more types thereof. The blending amount of the antioxidant in the cosmetic preferably ranges from 0.1 to 5% by weight (mass) with respect to the total weight (mass) of the cosmetic.

As examples of chelating agents, mention may be made of, for example, EDTA, alanine, sodium edetate, sodium polyphosphate, sodium metaphosphate, phosphoric acid and the like. They may be used in combination with two or more types thereof. The blending amount of the chelating agent in the cosmetic preferably ranges from 0.1 to 5% by weight (mass) of the total amount (mass) of the cosmetic.

As examples of perfumes, mention may be made of, for example, perfume extracted from flowers, seeds, leaves, and roots of various plants; perfume extracted from seaweeds; perfume extracted from various parts or secretion glands of animals such as musk and sperm oil; or artificially synthesized perfume such as menthol, musk, acetate, and vanilla, including various extracts listed as the physiologically active components. They may be used in combination with two or more types thereof. The blending amount of the perfume in the cosmetic preferably ranges from 0.1 to 5% by weight (mass) with respect to the total weight (mass) of the cosmetic.

As pigments, there are, for example, dyes, colorants, fluorescent brighteners. As dyes, there are water-soluble dyes, oil-soluble dyes, natural dyes, synthetic dyes, and the like. As colorants, there are extenders, inorganic colorants, organic colorants and the like. They may be used in combination with two or more types thereof. The blending amount of the pigment in the cosmetic preferably ranges from 0.1 to 5% by weight (mass) with respect to the total weight (mass) of the cosmetic.

The forms and properties of the cosmetics of the present invention are not particularly restricted. A cosmetic in the form of an oil-in-water emulsion, and in particular, an oil-in-water emulsion cosmetic having a dispersion phase having an average particle size of 10.0 µm or less, 0.5 µm (500 nm) or less, and in particular, 0.2 µm (200 nm) or less, measured by means of a laser diffraction/scattering method, in a continuous aqueous phase is preferable. The oil-in-water emulsion cosmetic having an average particle size of 0.5 µm or less has an outer appearance which is translucent to cloud, and has an advantage in that superior stability over time is particularly exhibited.

The cosmetic in the form of an oil-in-water emulsion can be obtained by mixing the polysiloxane-hydrocarbylene aminohydrocarbylene multiblock copolymer of the present invention and cosmetic raw materials commonly used as described above with a specified amount of water, by means of a conventional apparatus such as a paddle mixer, a propeller stirrer, a Henschel mixer, a TK homomixer (manufactured by Tokushu Kika Kogyo Co., Ltd.), a TK homodisper (manufactured by Tokushu Kika Kogyo Co., Ltd.), or the like. When they are mixed, use of a high-pressure emulsifying apparatus, or an emulsifier with high shearing force such as a colloid mill or a colloid mixer as described above is not particularly necessary, but is preferable since a stable oil-in-water emulsion having a small particle size to microparticle size can be obtained.

In order to produce a cosmetic in the form of an oil-in-water emulsion, for example, first, components constituting a dispersion phase are uniformly mixed to prepare a pre-mixture. Subsequently, while water and components constituting an aqueous phase are stirred at a rotation rate ranging from about 500 to 5,000 rpm, the aforementioned pre-mixture and the copolymer of the present invention are gradually added thereto in any order, followed by further stirring the mixture. The weight (mass) ratio of water with respect to the pre-mixture is not restricted, and advantageously ranges from 0.05/0.95 to 0.50/0.50 in view of stability over time of the obtained oil-in-water emulsion cosmetic. In the case of using the produced amount of the cosmetic being small, for example, while water and the components constituting the aqueous phase are stirred in any container by means of a paddle or the like by humans, the aforementioned pre-mixture and the polysiloxane-N,N-dihydrocarbylene sugar-modified multiblock copolymer of the present invention may be gradually added thereto.

The cosmetic of the present invention in the form of an oil-in-water emulsion exhibits superior stability over time and a superior sensation during use.

Use of the aforementioned cosmetic is not particularly restricted, and the cosmetic may be used in a cosmetic for skin such as a skin cleansing preparation, a skin care cosmetic, a makeup cosmetic, an antiperspirant, a preparation for controlling UV rays or the like; a cosmetic for hair such as a hair cleansing preparation, a hair styling composition, a hair coloring composition, a hair tonic, a hair rinse or the like; a cosmetic composition for use in bathing; perfume, eau de cologne or the like. The cosmetic comprising the polysiloxane-hydrocarbylene aminohydrocarbylene multiblock copolymer of the present invention is, in particular, preferably a cosmetic for skin or a cosmetic for hair.

The aforementioned cosmetic for skin may be used at any part of the scalp, face including lips, eyebrow, and cheek, fingers, nails, and entire bodies. More particularly, as examples thereof, mention may be made of a skin cleansing preparation such as cleansing gel, cleansing cream, cleansing foam, cleansing milk, cleansing lotion, face cleansing cream, eye markup remover, face cleansing foam, liquid soap for use on entire bodies, hand soap, gel soap, solid soap, facial rinse, body rinse, shaving cream, enamel remover, cosmetic against acne or the like; a skin care cosmetic such as skin cream, scalp treatment, skin milk, milky lotion, emulsion, cosmetic lotion, humectant, serum, facial mask, body powder, essence, shaving lotion or the like; a makeup cosmetic such as foundation, makeup base, finishing powder, face powder, lipstick, lip cream, lip paste, lip gloss, eye shadow, eyeliner, eye cream, pencil, eyebrow, mascara, blusher, cheek cosmetic such as cheek color or cheek rouge, manicure, pedicure, nail color, nail lacquer, enamel remover, nail polish or the like; antiperspirant preparation such as deodorant or the like; and preparation for controlling UV rays such as sunscreening preparation, preparation for sunburn (suntan preparation) or the like.

As examples of the aforementioned cosmetics for hair, mention may be made of a hair cleansing preparation such as shampoo, rinse-in-shampoo or the like; a hair styling composition such as hair oil, hair curl retaining preparation, setting preparation, hair cream, hair spray, hair liquid, hair wax or the like; a coloring composition for hair such as hair dye composition, hair color spray, hair color rinse, hair color stick, or the like; pilatory composition such as hair tonic, hair treatment, hair pack or the like; a hair rinse such as conditioner, oil rinse, cream rinse, treatment rinse or the like; a cosmetic for eyelashes such as mascara or the like.

In addition, as examples of the aforementioned cosmetics for bathing, mention may be made of bath oil, bath salts, and bath foam.

A container for housing the aforementioned cosmetic is not particularly restricted. As examples thereof, mention may be made of a jar, a pump, a tube, a bottle, a pressurized can discharging container, a pressure tight aerosol container, a light shield container, a compact container, a metal dish, a stick container, a bringing up container, a spray container, a container with partitions, equipped with a mixture discharging port, and the like. In the case of an oil-in-water emulsion type cosmetic, examples of containers may include a jar, a pump, a bottle, a spray container or the like. The oil-in-water emulsion cosmetic produced by using the amino acid-modified organopolysiloxane emulsion according to the present invention exhibits superior stability over time. For this reason, even if the cosmetic is filled in a transparent container, the cosmetic can be stably stored, and can be subjected to over-the-counter sales as a product exhibiting a superior outer appearance.

In addition thereto, the polysiloxane-N,N-dihydrocarbylene sugar-modified multiblock copolymer of the present invention can also be used as a mold releasing agent, an antifog additive, an antistatic agent, an antifoam agent, a fiber oil agent, a plastic modifier, a lustering agent, a lubricant or the like.

### Examples

The present invention is described in detail with reference to examples. It should be understood that the present invention is not restricted to the examples.

### Preparation Example 1

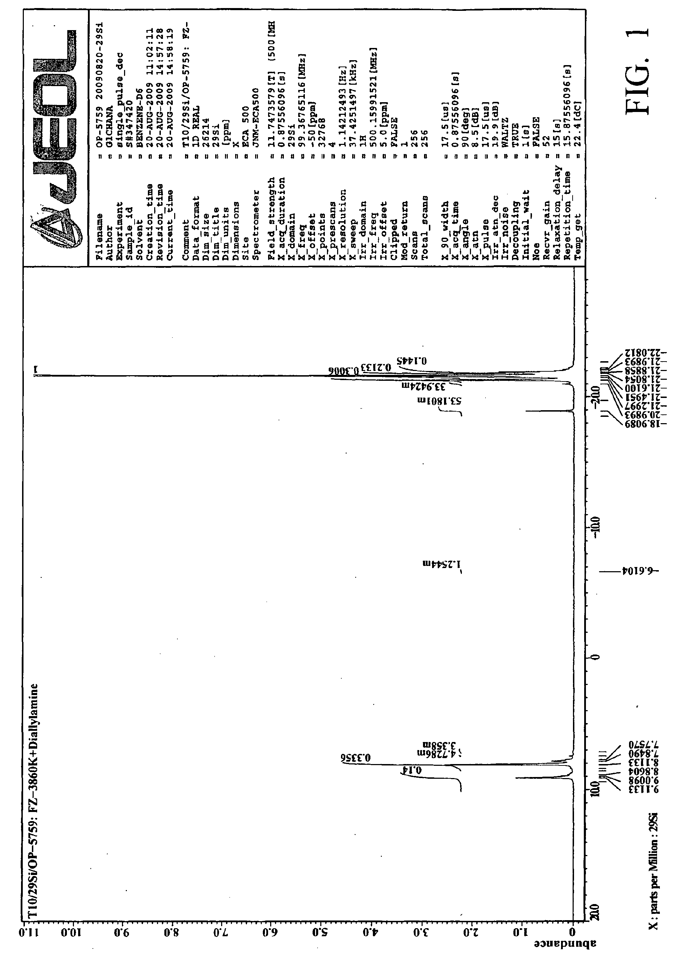

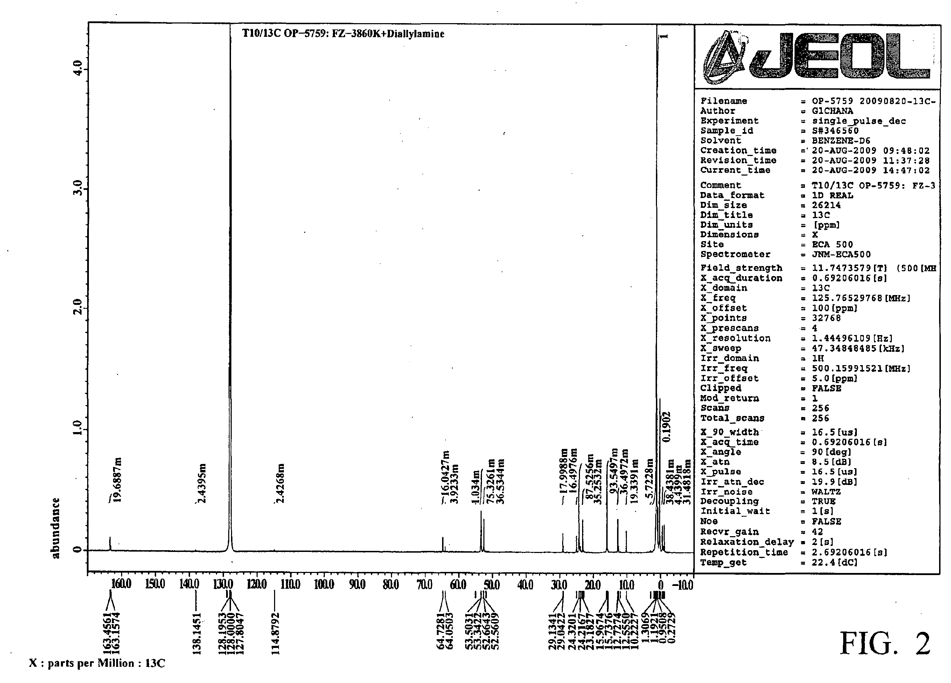

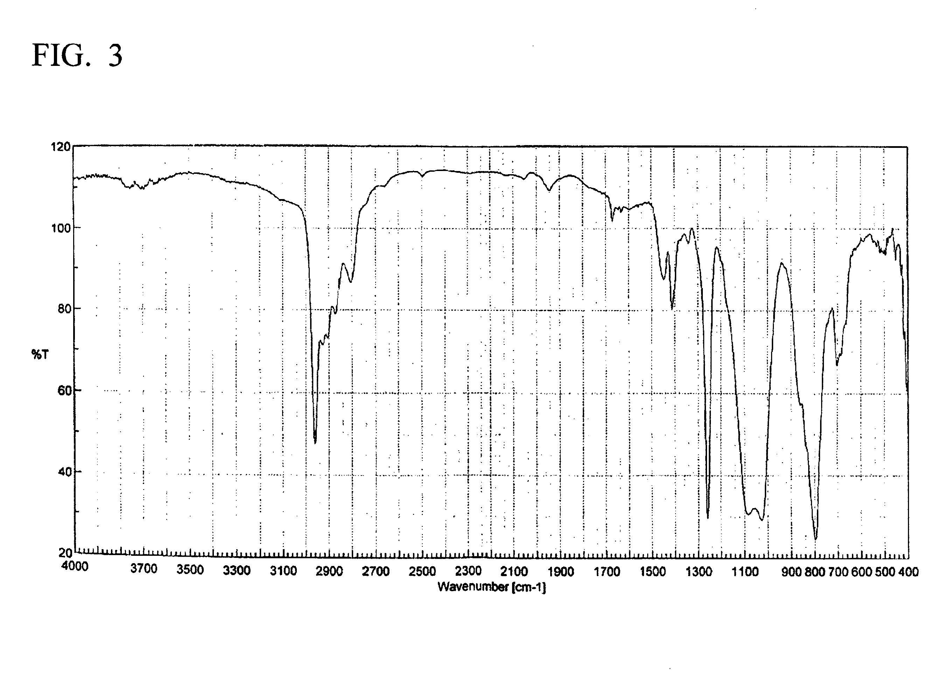

A complex catalyst between platinum and 1,3-divinyltetramethyldisiloxane was added to 80 g (130.1 mmol) of a polydimethylsiloxane in which both terminals were capped with SiH groups and which had a degree of polymerization of 6.5 so that an amount of the platinum metal was 10 ppm of the total amount of the reaction mixture, and the mixture was heated to 90°C under a nitrogen atmosphere. Subsequently, while 13.9 g (143.1 mmol, Vi (vinyl group)/SiH (silicon atom-binding hydrogen atom) ratio = 1.1) was slowly added dropwise thereto, the mixture was heated for 3 hours at 90°C to 140°C. It was confirmed that the characteristic absorption of the SiH group disappeared by means of an IR analysis of the reaction mixture. Subsequently, products with low boiling points were removed by heating under reduced pressure. Thereby, a pale yellow transparent liquid was obtained in an amount of 90.1 g (yield = 96%). The analysis results of ²⁹SiNMR shown in Fig. 1, showed that a polysiloxane- propylene aminopropylene multiblock copolymer having repeating units represented by the following structure: 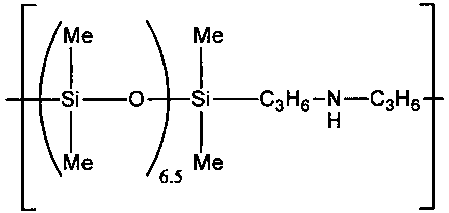 wherein a ratio of an alpha addition and a beta addition was about 30:70 was obtained. In addition, almost all the terminal allylamino groups were transferred to ethylimino groups. Fig. 2 and Fig. 3 respectively show the results of ²⁹SiNMR and IR absorption analyses of the polysiloxane-propylene aminopropylene multiblock copolymer obtained in Preparation Example 1.

In addition, the amino group in the product was amidated with diethyl pyrocarbonate. Subsequently, a molecular weight thereof was measured by means of GPC (gel permeation chromatography). As a result, Mn (number average molecular weight) was 6.3 × 10³, and a degree of dispersion (Mw (weight average molecular weight)/Mn) was 1.57. An amino content rate was 2.28%.

### Preparation Example 2 to Preparation Example 6

Polysiloxane-propylene aminopropylene multiblock copolymers were obtained in the same manner as that described in Preparation Example 1, with the exception of using polysiloxanes in which both terminals were capped with SiH groups and which had different degrees of polymerization and changing Vi/SiH. The obtained polysiloxane-propylene aminopropylene multiblock copolymers were analyzed in the same manner as that described in Preparation Example 1. The results are shown in Table 1.

**Table 1**

| | Preparation Example 2 | Preparation Example 3 | Preparation Example 4 | Preparation Example 5 | Preparation Example 6 |
|---|---|---|---|---|---|
| Degree of polymerization of both terminal SiH functional polysiloxane | 9 | 34 | 43 | 65 | 107 |
| Vi/SiH ratio | 1.1 | 1.33 | 1.33 | 1.33 | 1.33 |
| Mn | 7.4 × 10³ | 1.78 × 10⁴ | 1.83 × 10⁴ | 2.49 × 10⁴ | 3.86 × 10⁴ |
| Mw/Mn | 1.47 | 1.80 | 1.79 | 1.55 | 1.64 |
| Measured value of amino group content rate (%) (*) | 1.88 | 0.60 | 0.57 | 0.34 | 0.24 |
| Calculated value of amino group content rate (%) (*) | 2.06 | 0.77 | 0.62 | 0.42 | 0.26 |

| | | | | | |
|---|---|---|---|---|---|
| (*) NH₂ conversion | | | | | |

### Example 1

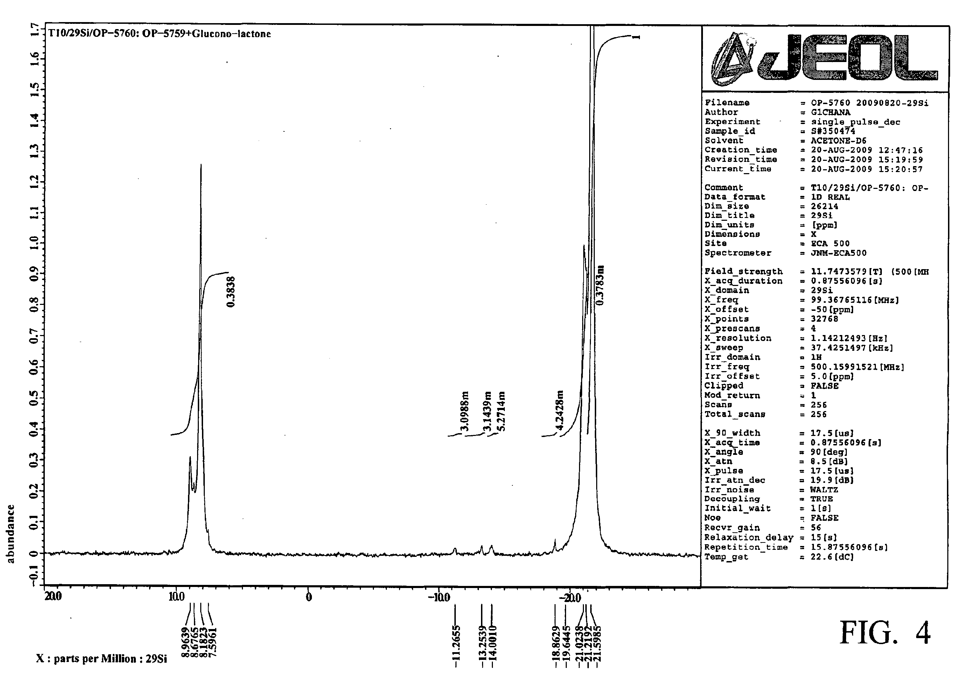

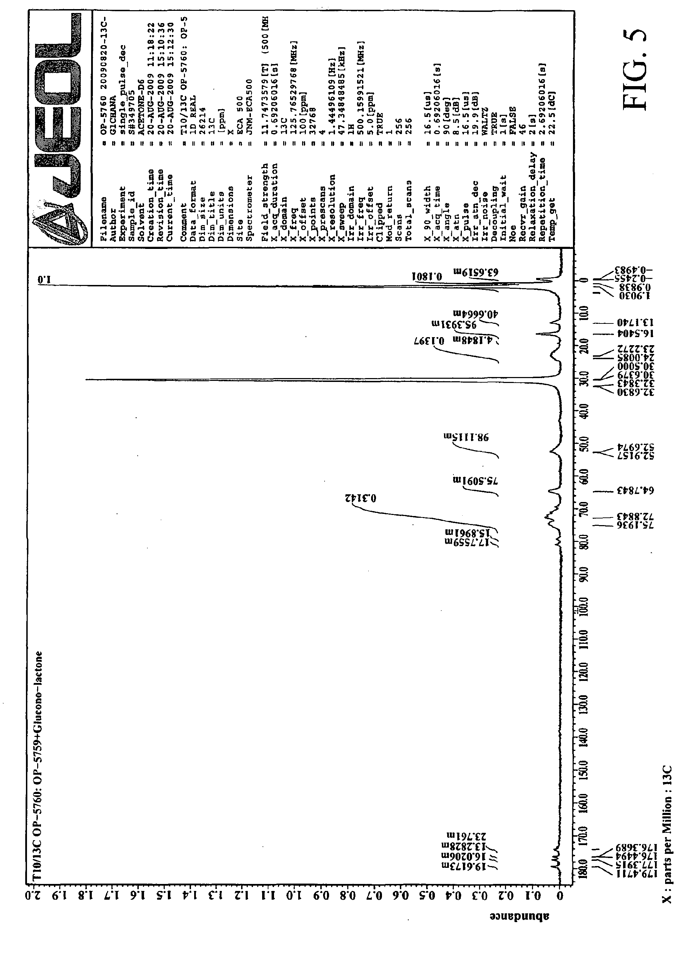

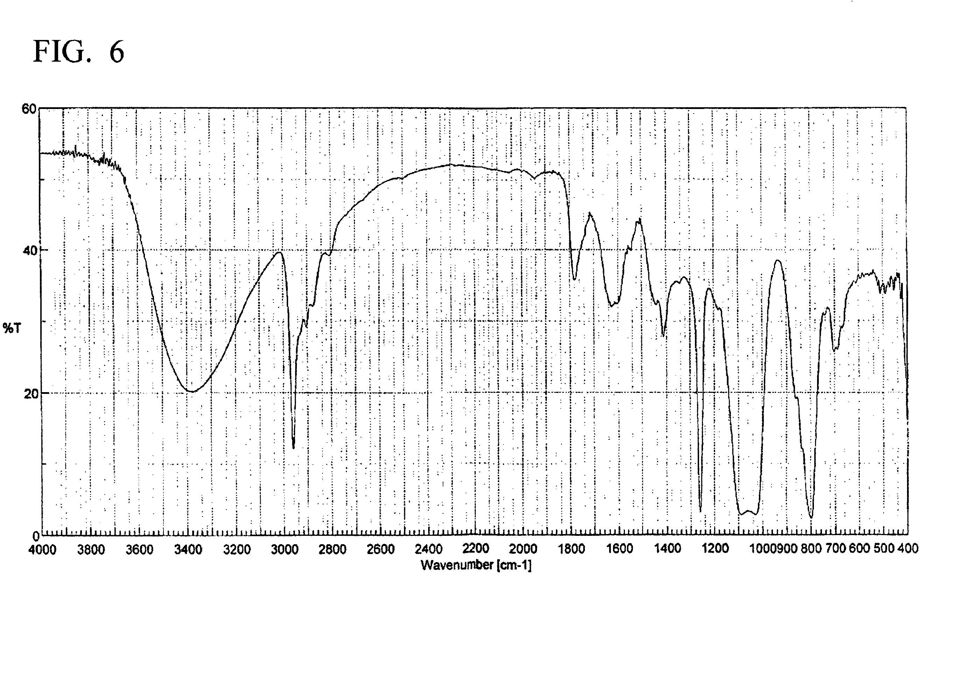

Gluconolactone was added in an amount of 1.15 times molar amount with respect to the secondary amino group to a 50% ethanol solution of the polysiloxane-propylene aminopropylene multiblock copolymer in which a degree of polymerization of the silicone moiety-repeating units synthesized in Preparation Example 1 was 6.5. The mixture was heated and stirred for 7 hours at 50 to 65°C. After materials with a low boiling point were removed by heating under reduced pressure, an orange transparent polymer with an increased viscosity was obtained. The yield was 98%. In accordance with NMR and IR analyses, the obtained copolymer was polysiloxane-N,N-dipropylenegluconic amide multiblock copolymer. Fig. 4 to Fig. 6 respectively show the results of ²⁹Si-NMR, ¹³C-NMR, and IR analyses of the polysiloxane-N,N-dipropylenegluconic amide multiblock copolymer produced in Example 1.

### Example 2 to Example 6

Polysiloxane-N,N-dipropylenegluconic amide multiblock copolymers were produced in the same manner as that of Example 1, with the exception of using the polysiloxane-propylene aminopropylene multiblock copolymers obtained in Preparation Examples 2 to 6. The produced polysiloxane-N,N-dipropylenegluconic amide multiblock copolymers were analyzed in the same manner as that described in Example 1. The results are shown in Table 2.

**Table 2**

| | Ex. 2 | Ex. 3 | Ex. 4 | Ex. 5 | Ex. 6 |
|---|---|---|---|---|---|
| Amino polymer | Preparation Example 2 | Preparation Example 3 | Preparation Example 4 | Preparation Example 5 | Preparation Example 6 |
| Degree of polymerization of silicone moiety repeating units | 9 | 34 | 43 | 65 | 107 |
| Equivalent ratio of (lactone)/ (amino group) | 1.09 | 1.29 | 1.09 | 1.26 | 1.08 |
| Mn | 7.05 × 10³ | 1.63 × 10⁴ | 1.34 × 10⁴ | 2.39 × 10⁴ | 3.25 × 10⁴ |
| Mw/Mn | 2.58 | 2.12 | 2.71 | 2.40 | 3.06 |

### Evaluation 1

0.04 g of the polysiloxane-N,N-dipropylenegluconic amide multiblock copolymer having a degree of silicone polymerization of 43, obtained in Example 4, 0.03 g of ethanol, 20 g of decamethylcyclopentasiloxane, and 20 g of water were stirred for 10 minutes at 3,000 rpm by means of a homodisper. An isolation rate of the obtained emulsion after 24 hours was 7%.

On the other hand, an isolation rate of an emulsion obtained from the following comb-type sugar-functional silicone: 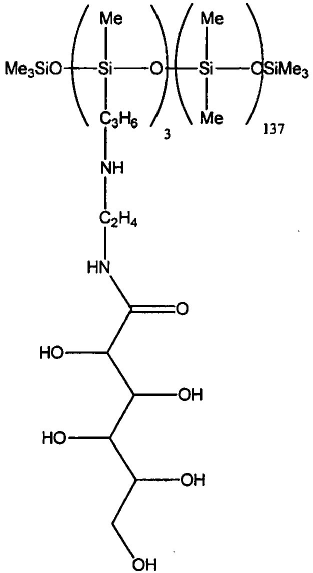 was 27%. An isolation rate of an emulsion obtained from the following ABA-type sugar-modified silicone: 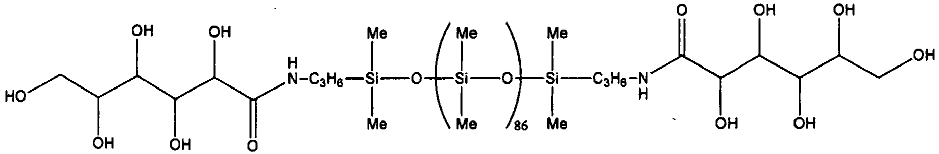 was 13%.

### Evaluation 2

2 g of the polysiloxane-N,N-dipropylenegluconic amide multiblock copolymer having a degree of silicone polymerization of 107, obtained in Example 6, and 18 g of a dimethylpolysiloxane (SH 200 C FLUID 6 CS, manufactured by Dow Corning Toray Co., Ltd.) were mixed. 5 g of an aqueous phase mixture consisting of sodium chloride:glycerol:water = 1:5:74 (weight (mass) ratio) per every addition was added thereto, and mixing the mixture for 36 seconds by means of a dental mixer was repeated after every addition. Thereby, a water-in-oil emulsion in the total amount of 100 g was obtained. The particle size of the aqueous phase particles in the obtained water-in-oil emulsion was observed by visual observation by means of a transmission electron microscope (ECLIPSE 80i model, manufactured by Nikon Corporation). As a result, the particle size ranged from 2 to 5 µm.

On the other hand, another water-in-oil emulsion was obtained in the same manner as that described above, using the following comb-type sugar-modified silicone: 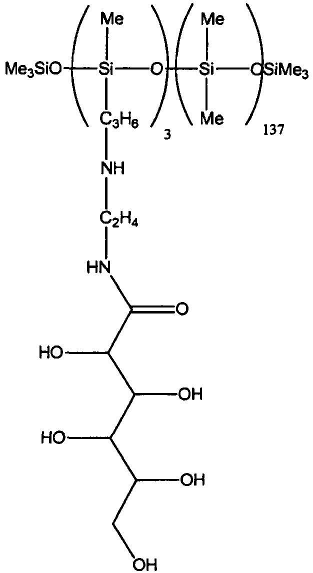 instead of the polysiloxane-N,N-dipropylenegluconic amide multiblock copolymer. The particle size of the aqueous phase particles in the obtained water-in-oil emulsion was observed by visual observation by means of a transmission electron microscope (ECLIPSE 80i model, manufactured by Nikon Corporation). As a result, the particle size ranged from 2 to 20 µm.

### Evaluation 3

2 g of the polysiloxane-N,N-dipropylenegluconic amide multiblock copolymer having a degree of silicone polymerization of 34, obtained in Example 3, and 18 g of a dimethylpolysiloxane (SH 200 C FLUID 6 CS, manufactured by Dow Corning Toray Co., Ltd.) were mixed. 5 g of an aqueous phase mixture consisting of sodium chloride:glycerol:water = 1:5:74 (weight (mass) ratio) per every addition was added thereto, and mixing the mixture for 36 seconds by means of a dental mixer was repeated after every addition. Thereby, a water-in-oil emulsion in the total amount of 100 g was obtained. The viscosity of the obtained water-in-oil emulsion and the viscosity of the same emulsion stored for 3 weeks at 50°C were measured by means of a dynamic viscoelastic tester under the measuring conditions described below. A retention rate of the viscosity of the sample stored for three weeks with respect to the viscosity of the initial sample was obtained on percentage. In the same manner as that described above, the retention rates of the comb-type sugar-modified silicones of Example 4 and Example 5 were also measured.

Diameter of the sample = 40 mm
Thickness of the sample = 0.3 mm
Strain = 100%
Frequency = 0.05 Hz to 80 Hz
Retention rate = [(viscosity of the sample stored for 3 weeks at 50°C)/(viscosity of the initial sample)] × 100 (%)

On the other hand, another water-in-oil emulsion was obtained in the same manner as that described above, using a comb-type sugar-modified silicone represented by the following formula (1): 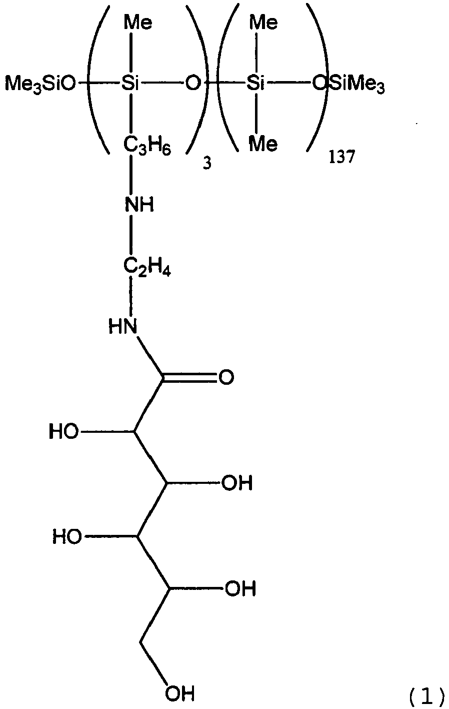 instead of the polysiloxane-N,N-dipropylenegluconic amide multiblock copolymer. The viscosity of the obtained water-in-oil emulsion and the viscosity of the same emulsion stored for 3 weeks at 50°C were measured by means of a dynamic viscoelastic tester. A retention rate was obtained by percentage. The results are shown in Table 3.

**Table 3**

| Sugar-modified silicone | Example 3 | Example 4 | Example 5 | Formula (1) |
|---|---|---|---|---|
| Retention rate (%) | 61 | 55 | 51 | 16 |

The copolymers of Examples can form stable emulsions. Therefore, the aforementioned polymers are suitable as emulsifying agents.

## Claims

1. A polysiloxane-N,N-dihydrocarbylene sugar-modified multiblock copolymer having at least one unit represented by the following general formula: 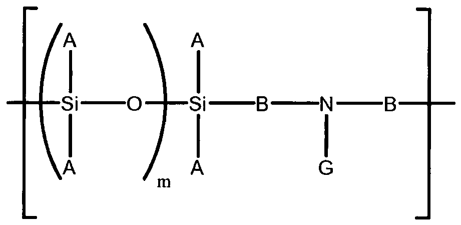 wherein
each A independently represents a monvalent hydrocarbon group having no aliphatic unsaturated bond;
each B independently represents a divalent hydrocarbon group;
G represents a sugar acid residue; and
m represents a number ranging from 1 to 1,000, inclusive.

2. The copolymer according to claim 1, which satisfies one or more of the following conditions:
- A is a methyl group;
- B is a propylene group;
- a number of said units ranges from 2 to 1,000.

3. The copolymer according to claim 1 or claim 2, wherein said G is an aldonoyl group or a uronoyl group.

4. The copolymer according to claim 3, which satisfies one or both of the following conditions:
- said aldonoyl group is represented by -CO-(CHOH)ₗ-CH₂OH wherein 1 represents an integer ranging from 1 to 10;
- said aldonoyl group is a ribonic acid residue, an arabinonic acid residue, a xylonic acid residue, a lyxonic acid residue, an allonic acid residue, an altronic acid residue, a gluconic acid residue, a mannoic acid residue, a gulonic acid residue, an idonic acid residue, a galactonic acid residue, or a talonic acid residue.

5. The copolymer according to claim 3, wherein said uronoyl group is a glucuronic acid residue, an iduronic acid residue, a galacturonic acid residue, or a mannuronic acid residue.

6. An aqueous or emulsion composition comprising the copolymer as recited in any one of claims 1 to 5.

7. A surface treating agent comprising the copolymer as recited in any one of claims 1 to 5.

8. A paint comprising the copolymer as recited in any one of claims 1 to 5.

9. A cosmetic comprising the copolymer as recited in any one of claims 1 to 5.

10. A surfactant comprising the copolymer as recited in any one of claims 1 to 5.

11. A method for producing a polysiloxane-N,N-dihydrocarbylene sugar-modified multiblock copolymer comprising reacting
a polysiloxane-hydrocarbylene aminohydrocarbylene multiblock copolymer having at least one unit represented by the following general formula: 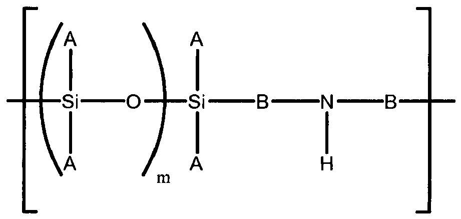 wherein
each A independently represents a monvalent hydrocarbon group having no aliphatic unsaturated bond;
each B independently represents a divalent hydrocarbon group;
and
m represents a number ranging from 1 to 1,000, inclusive,
and a sugar acid or an intramolecular dehydration cyclic product thereof.

12. The method according to claim 11, wherein one or more of the following conditions are satisfied:
- said sugar acid or intramolecular dehydration cyclic product thereof reacts with a secondary amino group in said polysiloxane-hydrocarbylene aminohydrocarbylene multiblock copolymer;
- said A is a methyl group;
- said intramolecular dehydration cyclic product of said sugar acid is an aldonolactone or a uronolactone.

13. The method according to claim 11 or claim 12, wherein said sugar acid is aldonic acid or uronic acid.

14. The method according to claim 13, wherein:
- said aldonic acid is ribonic acid, arabinonic acid, xylonic acid, lyxonic acid, allonic acid, altronic acid, gluconic acid, mannoic acid, gulonic acid, idonic acid, galactonic acid, or talonic acid; or
- said uronic acid is glucuronic acid, iduronic acid, galacturonic acid, or mannuronic acid.

15. The method according to any one of claims 11 to 14,
wherein said polysiloxane-N,N-dihydrocarbylene sugar-modified multiblock copolymer has at least one unit represented by the following general formula: 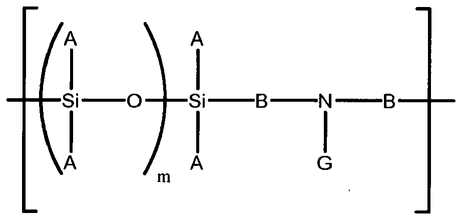 wherein
A, B and m are the same as those defined above; and G represents a sugar acid residue.

## Patentansprüche

1. Zuckermodifiziertes Polysiloxan-N,N-dihydrocarbylen-Multiblockcopolymer, aufweisend mindestens eine Einheit, die durch die folgende allgemeine Formel dargestellt wird: 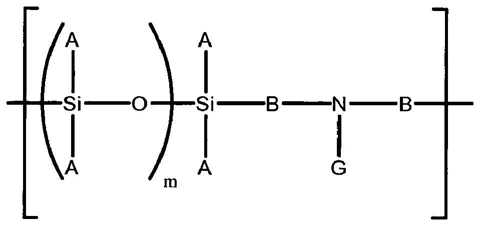 worin
jedes A unabhängig für eine einwertige Kohlenwasserstoffgruppe steht, die keine aliphatische ungesättigte Bindung aufweist;
jedes B unabhängig für eine zweiwertige Kohlenwasserstoffgruppe steht;
G für einen Zuckersäurerest steht; und
m für eine Zahl im Bereich von 1 bis einschließlich 1.000 steht.

2. Copolymer nach Anspruch 1, welches eine oder mehrere der folgenden Bedingungen erfüllt:
- A ist eine Methylgruppe;
- B ist eine Propylengruppe;
- eine Anzahl der Einheiten liegt im Bereich von 2 bis 1.000.

3. Copolymer nach Anspruch 1 oder Anspruch 2, wobei das G eine Aldonoylgruppe oder eine Uronoylgruppe ist.

4. Copolymer nach Anspruch 3, welches eine oder beide der folgenden Bedingungen erfüllt:
- die Aldonoylgruppe wird dargestellt durch -CO-(CHOH)₁-CH₂OH, worin 1 für eine ganze Zahl im Bereich von 1 bis 10 steht;
- die Aldonoylgruppe ist ein Ribonsäurerest, ein Arabinonsäurerest, ein Xylonsäurerest, ein Lyxonsäurerest, ein Allonsäurerest, ein Altronsäurerest, ein Gluconsäurerest, ein Mannonsäurerest, ein Gulonsäurerest, ein Idonsäurerest, ein Galactonsäurerest oder ein Talonsäurerest.

5. Copolymer nach Anspruch 3, wobei die Uronoylgruppe ein Glucuronsäurerest, ein Iduronsäurerest, ein Galacturonsäurerest oder ein Mannuronsäurerest ist.

6. Wässrige oder Emulsionszusammensetzung, umfassend das Copolymer nach einem der Ansprüche 1 bis 5.

7. Oberflächenbehandlungsmittel, umfassend das Copolymer nach einem der Ansprüche 1 bis 5.

8. Lack, umfassend das Copolymer nach einem der Ansprüche 1 bis 5.

9. Kosmetikartikel, umfassend das Copolymer nach einem der Ansprüche 1 bis 5.

10. Tensid, umfassend das Copolymer nach einem der Ansprüche 1 bis 5.

11. Verfahren zur Herstellung eines zuckermodifizierten Polysiloxan-N,N-dihydrocarbylen-Multiblockcopolymers, umfassend die Umsetzung
eines Polysiloxan-hydrocarbylen-aminohydrocarbylen-Multiblockcopolymers, aufweisend mindestens eine Einheit, die durch die folgende allgemeine Formel dargestellt wird: 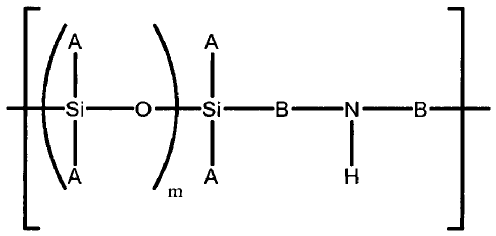 worin
jedes A unabhängig für eine einwertige Kohlenwasserstoffgruppe steht, die keine aliphatische ungesättigte Bindung aufweist;
jedes B unabhängig für eine zweiwertige Kohlenwasserstoffgruppe steht; und
m für eine Zahl im Bereich von 1 bis einschließlich 1.000 steht,
und eine Zuckersäure oder ein innermolekulares cyclisches Dehydratisierungsprodukts davon.

12. Verfahren nach Anspruch 11, wobei eine oder mehrere der folgenden Bedingungen erfüllt sind:
- die Zuckersäure oder das innermolekulare cyclische Dehydratisierungsprodukt davon reagiert mit einer sekundären Aminogruppe in dem Polysiloxan-hydrocarbylenaminohydrocarbylen-Multiblockcopolymer;
- das A ist eine Methylgruppe;
- das innermolekulare cyclische Dehydratisierungsprodukt der Zuckersäure ist ein Aldonolacton oder ein Uronolacton.

13. Verfahren nach Anspruch 11 oder Anspruch 12, wobei die Zuckersäure Aldonsäure oder Uronsäure ist.

14. Verfahren nach Anspruch 13, wobei:
- die Aldonsäure Ribonsäure, Arabinonsäure, Xylonsäure, Lyxonsäure, Allonsäure, Altronsäure, Gluconsäure, Mannonsäure, Gulonsäure, Idonsäure, Galactonsäure oder Talonsäure ist; oder
- die Uronsäure Glucuronsäure, Iduronsäure, Galacturonsäure oder Mannuronsäure ist.

15. Verfahren nach einem der Ansprüche 11 bis 14, wobei das zuckermodifizierte Polysiloxan-N,N-dihydrocarbylen-Multiblockcopolymer mindestens eine Einheit aufweist, die durch die folgende allgemeine Formel dargestellt wird: 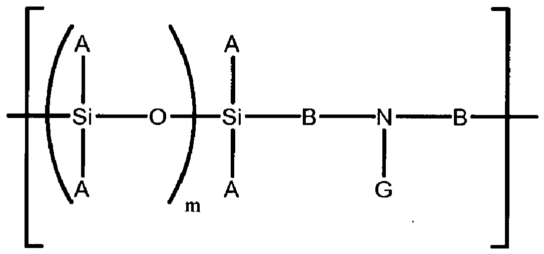 worin
A, B und m wie vorstehend definiert vorliegen;
und G für einen Zuckersäurerest steht.

## Revendications

1. Copolymère multiblocs du polysiloxane-N,N-dihydrocarbylène, à modification sucre, ayant au moins un motif représenté par la formule générale suivante : 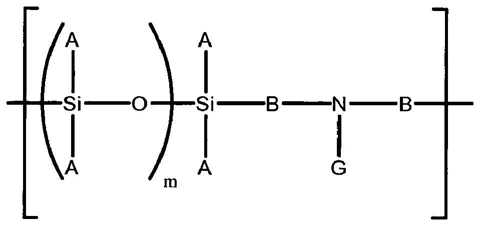 où
chaque A représente indépendamment un groupe hydrocarboné monovalent dépourvu de liaison insaturée aliphatique ; chaque B représente indépendamment un groupe hydrocarboné divalent ;
G représente un résidu ose acide ; et
m représente un nombre allant de 1 (inclus) à 1 000 (inclus).

2. Copolymère selon la revendication 1, satisfaisant à l'une au moins des conditions suivantes:
- A est un groupe méthyle ;
- B est un groupe propylène ;
- un nombre desdits motifs varie de 2 à 1 000.

3. Copolymère selon la revendication 1 ou la revendication 2, dans lequel G est un groupe aldonoyle ou un groupe uronoyle.

4. Copolymère selon la revendication 3, satisfaisant à l'une des conditions suivantes ou aux deux:
- ledit groupe aldonoyle est représenté par -CO-(CHOH)₁-CH₂OH, où 1 représente un nombre entier allant de 1 à 10 ;
- ledit groupe aldonoyle est un résidu acide ribonique, un résidu acide arabinonique, un résidu acide xylonique, un résidu acide lyxonique, un résidu acide allonique, un résidu acide altronique, un résidu acide gluconique, un résidu acide mannoïque, un résidu acide gulonique, un résidu acide idonique, un résidu acide galactonique, ou un résidu acide talonique.

5. Copolymère selon la revendication 3, ledit groupe uronoyle étant un résidu acide glucuronique, un résidu acide iduronique, un résidu acide galacturonique, ou un résidu acide mannuronique.

6. Composition aqueuse ou émulsionnée comprenant le copolymère selon l'une quelconque des revendications 1 à 5.

7. Agent de traitement de surface comprenant le copolymère selon l'une quelconque des revendications 1 à 5.

8. Peinture comprenant le copolymère selon l'une quelconque des revendications 1 à 5.

9. Cosmétique comprenant le copolymère selon l'une quelconque des revendications 1 à 5.

10. Tensioactif comprenant le copolymère selon l'une quelconque des revendications 1 à 5.

11. Procédé de production d'un copolymère multiblocs du polysiloxane-N,N-dihydrocarbylène, à modification sucre, ledit procédé comprenant de faire réagir un copolymère multiblocs de polysiloxane-hydrocarbylène aminohydrocarbylène, ayant au moins un motif représenté par la formule générale suivante : 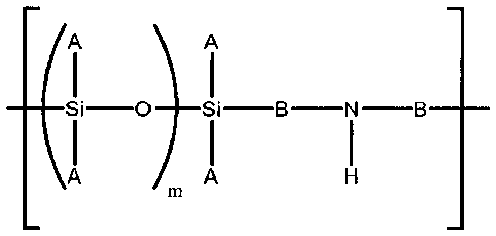 où
chaque A représente indépendamment un groupe hydrocarboné monovalent dépourvu de liaison insaturée aliphatique ; chaque B représente indépendamment un groupe hydrocarboné divalent ;
et
m représente un nombre allant de 1 (inclus) à 1 000 (inclus),
et un ose acide ou un produit cyclique issu de la déshydratation intramoléculaire de celui-ci.

12. Procédé selon la revendication 11, selon lequel l'une au moins des conditions suivantes est satisfaite :
- ledit ose acide ou produit cyclique issu de la déshydratation intramoléculaire de celui-ci réagit avec un groupe amine secondaire dudit copolymère multiblocs de polysiloxane-hydrocarbylène aminohydrocarbylène ;
- ledit A est un groupe méthyle ;
- ledit produit cyclique issu de la déshydratation intramoléculaire dudit ose acide est une aldonolactone ou une uronolactone.

13. Procédé selon la revendication 11 ou la revendication 12, selon lequel ledit ose acide est l'acide aldonique ou l'acide uronique.

14. Procédé selon la revendication 13, selon lequel :
- ledit acide aldonique est l'acide ribonique, l'acide arabinonique, l'acide xylonique, l'acide lyxonique, l'acide allonique, l'acide altronique, l'acide gluconique, l'acide mannoïque, l'acide gulonique, l'acide idonique, l'acide galactonique ou l'acide talonique ; ou
- ledit acide uronique est l'acide glucuronique, l'acide iduronique, l'acide galacturonique ou l'acide mannuronique.

15. Procédé selon l'une quelconque des revendications 11 à 14, où ledit copolymère multiblocs de polysiloxane-N,N-dihydrocarbylène, à modification sucre, comprend au moins un motif représenté par la formule générale suivante : 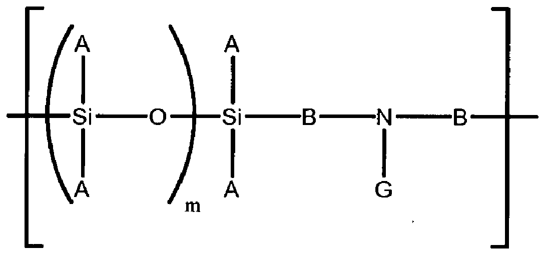 où
A, B et m sont tels que définis plus haut ; et G représente un résidu ose acide.
